# EUROPEAN PATENT APPLICATION

(11) **EP 4 810 854 A1**
(43) Date of publication of application: **23.09.2026**
(21) Application number: 24906244.9
(22) Date of filing: 12.12.2024
(51) Int. Cl.: F21S 41/141

(54) **HEADLAMP ASSEMBLY, FULL-WIDTH HEADLAMP AND VEHICLE**

(30) Priority: 18.12.2023 CN 202311738326; 18.12.2023 CN 202323443777 U; 18.12.2023 CN 202323443790 U; 18.12.2023 CN 202323455438 U; 18.12.2023 CN 202311738332; 18.12.2023 CN 202323443788 U
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CHANG, Yuyang, Ningbo, Zhejiang 315899 (CN); QI, Feng, Ningbo, Zhejiang 315899 (CN); YANG, Qiankun, Ningbo, Zhejiang 315899 (CN); CHEN, Chaojun, Ningbo, Zhejiang 315899 (CN); TIAN, Dongli, Ningbo, Zhejiang 315899 (CN)
(74) Representative: Michalski Hüttermann & Partner mbB
(86) International application number: PCT/CN2024/138994
(87) International publication number: WO 2025/130761

(57) **Abstract**

The present disclosure relates to the technical field of vehicle lamps, and in particular to a headlamp assembly, a full-width headlamp, and a vehicle. The headlamp assembly includes an interactive lamp, a multifunctional lamp, a headlamp module, and a lamp cover. The interactive lamp is configured to display interactive information; the multifunctional lamp includes a daytime running lamp, a position lamp, and a turn signal lamp integrated into one; the headlamp module includes a high beam lamp and a low beam lamp integrated into one; and the interactive lamp, the multifunctional lamp, and the headlamp module are all integrated and mounted in the lamp cover.

## Description

### TECHNICAL FIELD

The present disclosure relates to the technical field of vehicle lamps, and in particular to a headlamp assembly, a full-width headlamp, and a vehicle.

### BACKGROUND

A vehicle headlamp system is a main component of a vehicle lighting system, is located at a front end of a vehicle body, and generally includes lamps such as high beam and low beam lamps, turn signal lamps, and daytime running lamps. With development of science and technology, more advanced light source technologies such as LEDs, laser lamps, and OLEDs are being continuously applied to the vehicle headlamp system, to improve a lighting effect and energy efficiency.

### SUMMARY

The following is a summary of subject matter described in detail herein. This summary is not intended to limit the scope of protection of the claims.

At present, due to differences in vehicle brands, suppliers, and design concepts, various lamps in a vehicle headlamp system are generally designed independently of each other. Each lamp has an independent lamp cover, and needs to be equipped with an independent component such as mounting bracket, radiator, and controller, so that the vehicle headlamp system has an excessive number of parts, is complicated in structure, and is high in manufacturing costs and mounting difficulty, leading to numerous problems.

In view of the above problems, an objective of the present disclosure is to provide a headlamp assembly, a full-width headlamp, and a vehicle, where the headlamp assembly of the vehicle has a plurality of lamps sharing a common lamp cover, enabling a high integration, reducing structural redundancy, and lowering manufacturing costs.

To achieve the above objective and other related objectives, the present disclosure provides a headlamp assembly, including:
an interactive lamp configured to display interactive information;
a multifunctional lamp, including two of a daytime running lamp, a position lamp, and a turn signal lamp integrated into one;
a headlamp module including a high beam lamp and a low beam lamp integrated into one; and
a lamp cover, the interactive lamp, the multifunctional lamp, and the headlamp module being all integrated and mounted in the lamp cover.

As an optional embodiment of the present disclosure, the interactive lamp is disposed above the multifunctional lamp, and the multifunctional lamp is disposed above the headlamp module.

As an optional embodiment of the present disclosure, the interactive lamp is arranged in a strip shape as a whole, and the interactive lamp is configured to extend in a width direction of a vehicle and towards a middle position at a front end of a vehicle body of the vehicle.

As an optional embodiment of the present disclosure, the multifunctional lamp is arranged in a strip shape as a whole, and the multifunctional lamp is configured to be parallel to the interactive lamp.

As an optional embodiment of the present disclosure, the headlamp assembly further includes:
a lamp housing configured to be connectable with a vehicle body frame and/or a vehicle body panel of a vehicle;
where the interactive lamp, the multifunctional lamp and the headlamp module are integrated and mounted in the lamp housing.

As an optional embodiment of the present disclosure, the interactive lamp includes:
a mounting plate mounted on the lamp housing;
a flexible circuit board mounted on the mounting plate and including light-emitting elements arranged in an array on an outer side thereof;
a diffuser plate, at least partially covering the outer side of the flexible circuit board and configured to diffuse light emitted from the light-emitting elements; and
an outer lens region disposed on the lamp cover and assembled on an outer side of the diffuser plate.

As an optional embodiment of the present disclosure, the multifunctional lamp includes a light-emitting source with an adjustable color, and at least a portion of the light-emitting source differs in light color from other portions thereof.

As an optional embodiment of the present disclosure, the mounting plate is provided with a positioning unit, and the positioning unit is configured to position and mount the flexible circuit board relative to the mounting plate.

As an optional embodiment of the present disclosure, the diffuser plate is provided with a light-blocking coating on a portion of an outer side and/or an inner side thereof, where the portion provided with the light-blocking coating forms a light-shielding region, and a portion without the light-blocking coating forms light-transmitting regions, and multiple of the light-transmitting regions are arranged corresponding to a single light-emitting element.

As an optional embodiment of the present disclosure, the outer lens region is provided with a plating or a coating on an inner side thereof, and the plating or the coating at least partially covers an outer side of the light-transmitting regions of the diffuser plate.

As an optional embodiment of the present disclosure, the multifunctional lamp includes:
the light-emitting source mounted on the lamp housing;
a light source scattering channel mounted at a light-emitting end of the light-emitting source, the light source scattering channel being configured such that one end serves as a light source receiving end and the other end serves as a light source scattering end; and
a light-blocking enclosed cavity disposed around the light source scattering channel, with the light source scattering end of the light source scattering channel protruding out of an outlet of the light-blocking enclosed cavity.

As an optional embodiment of the present disclosure, the light-blocking enclosed cavity includes a lower decorative plate and an upper decorative plate;
the lower decorative plate and the upper decorative plate are spaced apart from each other, with a gap forming the light-blocking enclosed cavity;
the light-emitting source and the light source scattering channel are disposed in the gap; and
the light source scattering end of the light source scattering channel protrudes out of the gap.

As an optional embodiment of the present disclosure, the light-emitting source includes a first light source and a second light source;
the light source scattering channel includes a first light guide portion disposed corresponding to the first light source and a second light guide portion disposed corresponding to the second light source, and the first light guide portion and the second light guide portion are arranged in a width direction of a vehicle body.

As an optional embodiment of the present disclosure, the lamp housing extends from a side of a front end of the vehicle body to the middle of the front end of the vehicle body, a vehicle lamp assembly is mounted at a front end of the lamp housing, the lamp housing is provided with a plurality of mounting legs on a side thereof away from the vehicle lamp assembly, the mounting legs are at least configured to connect a front end frame and a fender bracket of the vehicle, and the lamp assembly includes an interactive lamp, the multifunctional lamp and the headlamp module.

As an optional embodiment of the present disclosure, the mounting legs include a first mounting leg, the first mounting leg is disposed at an upper end of the lamp housing located at the side of the front end of the vehicle body, with a positioning pin on the first mounting leg forming a positioning fit with a through hole of the fender bracket to limit the displacement of the lamp housing in a length direction of the vehicle and a width direction of the vehicle; and
the mounting legs include a second mounting leg, the second mounting leg is disposed at an upper end of the lamp housing located in the middle of the front end of the vehicle body, with a positioning hole on the second mounting leg being a waist-shaped hole, and the waist-shaped hole in a width direction forms a positioning fit with a positioning protrusion of the front end frame in the length direction of the vehicle.

As an optional embodiment of the present disclosure, for each of at least some of the mounting legs, a fragile portion is disposed on the mounting leg; and the mounting leg is provided with a connecting portion on a side of the fragile portion close to the lamp housing, and the connecting portion is configured to mount a spare mounting leg.

As an optional embodiment of the present disclosure, a headlamp seal is provided between the headlamp assembly and a front hood;
the headlamp seal is configured to form a seal between the headlamp assembly and the front hood, and the headlamp seal has a variable cross-section;
a cross-sectional shape and/or a cross-sectional area of the headlamp seal gradually changes from a first end to a second end of the headlamp seal; and
the first end is located close to a middle of a vehicle in a width direction, and the second end is located close to a fender of the vehicle.

As an optional embodiment of the present disclosure, the headlamp seal is provided with a strip-shaped cavity in a length direction thereof, and a cross-sectional shape and/or a cross-sectional area of the strip-shaped cavity gradually changes from a first end to a second end of the headlamp seal.

As an optional embodiment of the present disclosure, the headlamp seal includes:
a lamp assembly sealing surface configured to fit against the headlamp assembly;
a hood sealing edge configured to fit against a lower side of a front end of the front hood;
a mounting surface configured to be mounted to a vehicle frame; and
an arcuate surface disposed opposite to the mounting surface.

To achieve the above objective and other related objectives, the present disclosure provides a full-width headlamp, including:
an illuminated emblem located in the middle of a front end of a vehicle body, where the illuminated emblem is configured to display a preset fixed pattern; and
an interactive lamp disposed on two sides of the illuminated emblem, where the interactive lamp extends from the two sides of the illuminated emblem to two sides of the front end of the vehicle body, and the interactive lamp is configured to display different custom patterns.

As an optional embodiment of the present disclosure, the illuminated emblem includes:
a display panel including a first light-transmitting region configured to form the preset fixed pattern;
a first light source disposed on a side of the display panel close to the vehicle body and facing the display panel; and
a first light guide member disposed between the display panel and the first light source and configured to guide light from the first light source to the first light-transmitting region.

As an optional embodiment of the present disclosure, protrusions are provided on one side of the first light guide member and are corresponding to first light-emitting elements of the first light source one by one, and a light-exiting surface is provided on the other side of the first light guide member and has a contour consistent with that of the first light-transmitting region.

In order to achieve the above objective and other related objectives, the present disclosure provides a vehicle, including the headlamp assembly or the full-width headlamp.

As an optional embodiment of the present disclosure, the vehicle further includes a mounting bracket for a front bumper, where the mounting bracket for the front bumper includes a bracket body provided with:
a first connecting portion configured to be connected to the headlamp assembly;
a slot structure configured to enable an edge of the front bumper to be inserted therein in a first direction, where the first direction is a front-rear direction of a vehicle body; and
a first limiting portion configured to retain the edge of the front bumper, that is inserted into the slot structure, in the slot structure.

As an optional embodiment of the present disclosure, the slot structure includes a first clamping portion and a second clamping portion;
where the first clamping portion and the second clamping portion are both cantilevered from the bracket body towards a front end of the vehicle body, so that the slot structure can at least generate a vertical support force for the front bumper.

In summary, in the present disclosure, the interactive lamp, the multifunctional lamp, and the headlamp module are all integrated and mounted in the lamp cover to share a common lamp cover. In this way, the appearance of most or all of the lamps at the front end of the vehicle body is at least unified, such that the lamps at the front end of the vehicle body have a smoother and consistent appearance, improving the aesthetics of the front end of the entire vehicle. Moreover, the interactive lamp, the multifunctional lamp, and the headlamp module are all integrated and mounted in the lamp cover, enabling a compact structure, and reducing repeated accessories and components, thereby reducing the manufacturing costs to a certain extent. And, the design of the integrated structure can improve ease of mounting, reduce the assembly time and labor intensity, thereby reducing the costs. Meanwhile, the lamps with different functions cooperate with each other, enabling at least some of the lamps to share devices such as sensors, control units, and radiators, which reduces the costs, saves the mounting space, and makes the structure of the headlamp assembly of the vehicle more compact and efficient. And, various lamps share a common lamp cover, which is also conducive to the better aerodynamic performance at the front end of the vehicle body, and can reduce the air turbulence and resistance on the front of the vehicle to a certain extent, thereby improving the quality of the headlamp assembly of the vehicle.

Other aspects will become apparent upon reading and understanding the accompanying drawings and detailed description.

### BRIEF DESCRIPTION OF DRAWINGS

In order to more clearly illustrate technical solutions in embodiments of the present disclosure or in the related art, the accompanying drawings to be used in the description of the technical solutions in the embodiments or in the related art will be briefly introduced below. It is apparent that the accompanying drawings in the following description are only some of the embodiments of the present disclosure, and those of ordinary skill in the art can obtain other accompanying drawings from these accompanying drawings without creative efforts.
FIG. 1 is a schematic diagram of an internal structure of a headlamp assembly according to an embodiment of the present disclosure;
FIG. 2 is a schematic diagram of an arrangement of a headlamp assembly at a front end of a vehicle body according to an embodiment of the present disclosure;
FIG. 3 is a schematic diagram of an overall structure of a headlamp assembly according to an embodiment of the present disclosure;
FIG. 4 is a schematic diagram of an overall structure of a flexible circuit board in an interactive lamp according to an embodiment of the present disclosure;
FIG. 5 is an enlarged view of a structure at portion A of FIG. 4;
FIG. 6 is a schematic diagram of a partial structure of an interactive lamp according to an embodiment of the present disclosure;
FIG. 7 is a distribution diagram of a light-shielding region and a light-transmitting region on a diffuser plate according to an embodiment of the present disclosure, where a shaded portion illustrates a schematic diagram of an illuminated region;
FIG. 8 is a schematic structural diagram of two sets of light source scattering channels arranged in a same line according to an embodiment of the present disclosure;
FIG. 9 is an enlarged view of a structure at portion B of FIG. 8;
FIG. 10 is a schematic structural diagram of a side of a lamp housing according to an embodiment of the present disclosure;
FIG. 11 is a schematic structural diagram of another side of a lamp housing according to an embodiment of the present disclosure;
FIG. 12 is a top view of FIG. 10;
FIG. 13 is a front view of FIG. 10;
FIG. 14 is a side view of FIG. 10;
FIG. 15 is a schematic structural diagram of a headlamp seal according to an embodiment of the present disclosure;
FIG. 16 is a schematic cross-sectional view of a headlamp seal according to an embodiment of the present disclosure;
FIG. 17 is a partial enlarged view of portion C in FIG. 15;
FIG. 18 is a partial enlarged view of portion D in FIG. 15;
FIG. 19 is a schematic structural diagram of a full-width headlamp at a front end of a vehicle body according to an embodiment of the present disclosure;
FIG. 20 is a front view of a structure of an illuminated emblem according to an embodiment of the present disclosure;
FIG. 21 is a sectional view taken along line E-E of FIG. 20;
FIG. 22 is a schematic diagram of an internal three-dimensional structure of an illuminated emblem according to an embodiment of the present disclosure;
FIG. 23 is a schematic structural diagram of a first light guide member according to an embodiment of the present disclosure;
FIG. 24 is an exploded view of a structure of an illuminated emblem according to an embodiment of the present disclosure;
FIG. 25 is a schematic diagram of an overall front structure of a mounting bracket for a front bumper according to an embodiment of the present disclosure;
FIG. 26 is a schematic diagram of an overall side structure of a mounting bracket 80 for a front bumper according to an embodiment of the present disclosure;
FIG. 27 is a schematic diagram of a mounting structure of a mounting bracket 80 for a front bumper and a bottom of a lamp according to an embodiment of the present disclosure;

Description of reference numerals: interactive lamp 10, mounting plate 1011, positioning unit 10111, flexible circuit board 1012, strip plate 10121, retainer 10122, light-emitting element 1013, diffuser plate 1014, light-shielding region 10141, light-transmitting region 10142, multifunctional lamp 20, light-emitting source 2021, light source scattering channel 2022, light source receiving end 20221, light source scattering end 20222, first light guide portion 202201, second light guide portion 202202, refracting surface 20223, gap 20224, light-blocking enclosed cavity 2023, lower decorative plate 20231, upper decorative plate 20232, headlamp module 30, light-shielding member 3031;
mounting leg 50110, second positioning hole 50111, positioning pin 50112, mounting hole 50113, fragile portion 50114, connecting portion 50115, first mounting leg 50110a, second mounting leg 50110b, third mounting leg 50110c, fourth mounting leg 50110d, boss 50120;
headlamp seal 60, lamp assembly sealing surface 6011, hood sealing edge 6012, mounting surface 6013, arcuate surface 6014, first limiting edge 6015, second limiting edge 6016, positioning protrusion 6017, elastic plug 6018, strip-shaped cavity 6019;
illuminated emblem 70, display panel 7011, first light-transmitting region 70111, first light source 7012, first light guide member 7013, protrusion 70131, heat dissipation substrate 7015, adhesive backing 7016, outer panel 7017, light-transmitting panel 70171, light-shielding panel 70172, housing 7018;
mounting bracket 80 for front bumper, bracket body 8010, first positioning hole 8011, first wall 8012, second wall 8013, first reinforcing rib 80121, second reinforcing rib 80122, third reinforcing rib 8014, fourth reinforcing rib 8015, first connecting portion 801, slot structure 802, first clamping portion 8021, guide portion 80211, convex rib 80212, second clamping portion 8022, first limiting portion 803, headlamp assembly 1000, lamp housing 50, lamp cover 40, positioning post 802021, front bumper 8030.

### DETAILED DESCRIPTION

Embodiments of the present disclosure will be described in detail below through specific examples, and those skilled in the art can easily understand other advantages and effects of the present disclosure from the contents disclosed in the specification. The present disclosure may also be implemented or applied through other different specific embodiments, and various details in the specification may also be modified or changed based on different viewpoints and applications without departing from the spirit of the present disclosure. It should be noted that the following embodiments and features in the embodiments may be combined with each other without conflict. It is also to be understood that the terminology used in the embodiments of the present disclosure is for the purpose of describing particular embodiments and is not intended to limit the scope of protection of the present disclosure. The test methods without specific conditions in the following embodiments are generally in accordance with conventional conditions or in accordance with conditions recommended by various manufacturers.

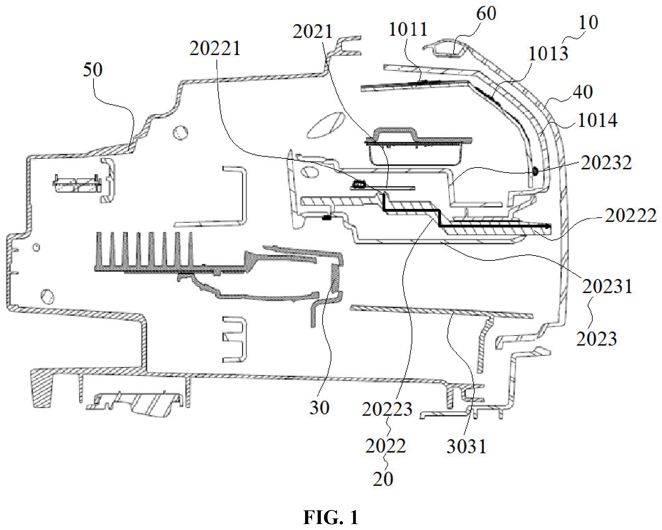

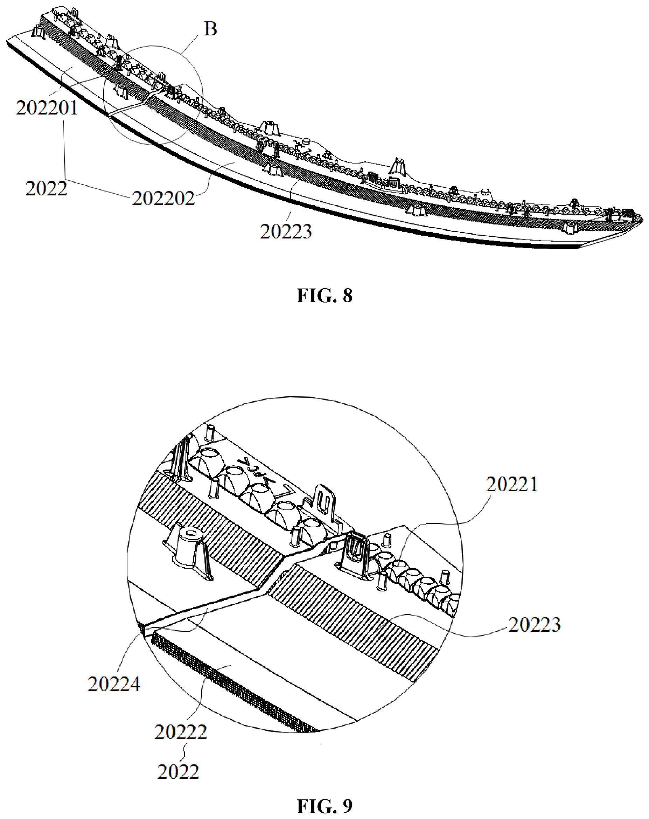

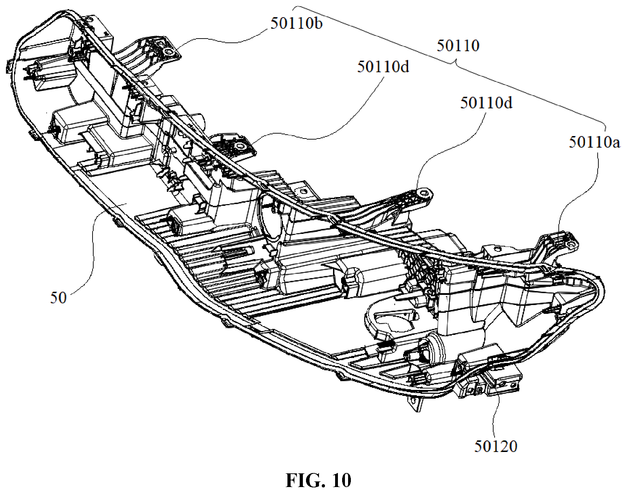

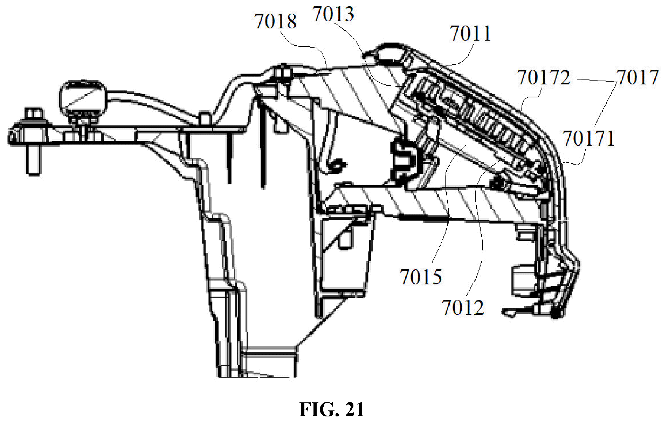

Please refer to FIGS. 1 to 27. It should be noted that the structures, proportions, sizes, etc. illustrated in the accompanying drawings of the present disclosure are only used to cooperate with the contents disclosed in the specification for those skilled in the art to understand and read, and are not used to limit the limitation conditions in which the present disclosure can be implemented, and thus have no technical substantive meanings. Any modification of the structures, change of the proportional relationship, or adjustment of the sizes should still fall within the scope covered by the technical contents disclosed in the present disclosure without affecting the effects and objectives that can be achieved by the present disclosure. Meanwhile, the terms such as "upper", "lower", "left", "right", "middle" and "a" used in the specification are only for the convenience of description, and are not intended to limit the scope of implementation of the present disclosure, and the change or adjustment of the relative relationship is considered to be within the scope of implementation of the present disclosure without substantial change of the technical contents.

When numerical ranges are given in the embodiments, it should be understood that, two endpoints of each numerical range and any value between the two endpoints may be selected, unless otherwise specified in the present disclosure. Unless otherwise defined, all technical and scientific terms used in the present disclosure are consistent with the knowledge of the related art by those skilled in the art and the description of the present disclosure, and the present disclosure may also be implemented using any method, device, and material in the related art that is similar or equivalent to the method, device, and material described in the embodiments of the present disclosure.

Each of light-emitting elements described in the present disclosure includes an LED (light-emitting diode), an OLED (organic light-emitting diode), a QLED (quantum dot light-emitting diode), or an LD (laser diode), and each type of light-emitting element is disposed on a corresponding circuit board and electrically connected to the corresponding circuit board. The circuit board is further provided with a driver chip that is electrically connected to the corresponding light-emitting element. The circuit board is further connected to a controller, the controller is electrically connected to the driver chip, and the controller is configured to control independent lighting of corresponding light-emitting elements to expand functionality of a light source.

A coordinate system of the entire vehicle refers to a vehicle coordinate system, which is used to describe and locate various components and systems of the vehicle. The coordinate system usually includes three coordinate axes and an origin. X-axis is usually aligned with a longitudinal direction of the vehicle, and points from rear to front of the vehicle. On the X-axis, the positive direction represents a forward direction, and the negative direction represents a backward direction. Y-axis is aligned with a lateral direction of the vehicle, and points from left to right of the vehicle. On the Y-axis, the positive direction represents a rightward direction, and the negative direction represents a leftward direction. Z-axis is aligned with a vertical direction of the vehicle, and points from the ground to the top of the vehicle. On the Z-axis, the positive direction represents an upward direction, and the negative direction represents a downward direction. The origin of the coordinate system of the entire vehicle is usually located at the center of mass of the vehicle, that is, the center of gravity of the vehicle. Taking the coordinate system of the entire vehicle as a reference, when the vehicle is located on a flat horizontal plane, the direction of the vehicle body towards the front of the vehicle body is indicative of the front, front end, or front portion, and the direction of the vehicle body towards the rear of the vehicle body is indicative of the rear, rear end, or rear portion. In the vertical direction of the vehicle, the upper, upper end, or upper portion is in the vertical upward direction of the vehicle, and the lower, lower end, or lower portion is in the vertical downward direction of the vehicle. The width direction of the vehicle body is perpendicular to the length direction of the vehicle body, and both the width direction of the vehicle body and the length direction of the vehicle body are perpendicular to the vertical direction.

Referring to FIG. 1, the present disclosure provides a headlamp assembly 1000, including an interactive lamp 10, a multifunctional lamp 20, a headlamp module 30, and a lamp cover 40. The interactive lamp 10 is configured to display interactive information. The multifunctional lamp 20 includes at least two of a daytime running lamp, a position lamp, and a turn signal lamp integrated into one. The headlamp module 30 includes at least a high beam lamp and a low beam lamp integrated into one. The interactive lamp 10, the multifunctional lamp 20, and the headlamp module 30 are all integrated and mounted in the lamp cover 40.

It should be noted that the interactive lamp 10 can mainly interact with the outside according to some customized or predefined patterns, such as displaying text or patterns, and can customize text or patterns according to actual requirements. Secondly, the interactive lamp 10 can also be used for lighting and decorating the front end of the vehicle body. The multifunctional lamp 20 integrates the daytime running lamp and the turn signal lamp into a whole. The multifunctional lamp 20 can also integrate other required functional lamps. The headlamp module 30 integrates at least the high beam lamp and the low beam lamp, and it should be understood that the headlamp module 30 can also integrate other types of lamps. The interactive lamp 10, the multifunctional lamp 20, and the headlamp module 30 are all integrated and mounted in the lamp cover 40 to share a common lamp cover 40. Therefore, the appearance of most or all of the lamps at the front end of the vehicle body is at least unified, such that the lamps at the front end of the vehicle body have a smoother and consistent appearance, improving the aesthetics of the front end of the entire vehicle. It should be understood that the headlamp assembly 1000 can integrate other lamps into the common lamp cover 40 in addition to the interactive lamp 10, the multifunctional lamp 20, and the headlamp module 30. The interactive lamp 10, the multifunctional lamp 20, and the headlamp module 30 are all integrated and mounted in the lamp cover 40, enabling a compact structure, and reducing repeated accessories and components, thereby reducing the manufacturing costs to a certain extent. And, the design of the integrated structure can improve ease of mounting, reduce the assembly time and labor intensity, thereby reducing the costs. Furthermore, the integrated design enables the lamps with different functions to cooperate with each other, enabling at least some or all of the lamps to share devices such as sensors, control units, and radiators, thereby reducing the costs, saving the mounting space, and making the structure of the headlamp assembly of the vehicle more compact and efficient. In addition, various lamps share a common lamp cover 40, which is also conducive to the better aerodynamic performance at the front end of the vehicle body, and can reduce air turbulence and resistance on the front of the vehicle to a certain extent, thereby improving the quality of the headlamp assembly 1000 at the front end of the vehicle body.

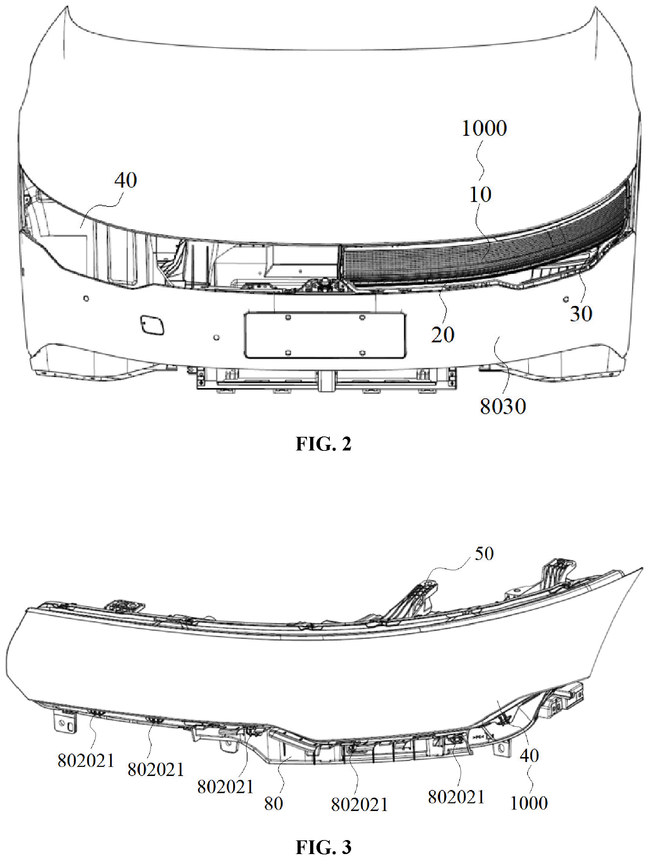

As an optional embodiment of the present disclosure, referring to FIGS. 1 and 2, the interactive lamp 10 is disposed above the multifunctional lamp 20, and the multifunctional lamp 20 is disposed above the headlamp module 30.

It should be noted that different types of lamps are distributed at different heights, which can facilitate other people on the road to easily identify the type and operation state of the vehicle. For example, the interactive information provided by the interactive lamp 10 and the turn signal provided by the multifunctional lamp 20 can both facilitate the identification by pedestrians or passing drivers. The high beam lamp and the low beam lamp are generally the main lighting sources for the vehicle to travel at night. The headlamp module 30 with the high beam lamp and the low beam lamp integrated is disposed at a lower position, which is beneficial for the light from the high beam lamp and the low beam lamp to be more directly projected onto the road surface, instead of being irradiated to the eyes of other pedestrians or passing drivers, thereby reducing glare and improving the safety of the vehicle during travelling at night. The daytime running lamp is configured to improve the visibility of the vehicle during daytime travelling, the position lamp is configured to improve the visibility of the vehicle during travelling at night, and the turn signal lamp can provide turning information of the vehicle to pedestrians and drivers of passing vehicles when the vehicle is turning. The arrangement of the daytime running lamp, the position lamp, and the turn signal lamp is mainly not to illuminate the road, but to exert their respective functions. Therefore, placing the multifunctional lamp 20 between the interactive lamp 10 and the headlamp module 30 can ensure the realization of multiple functions of the multifunctional lamp 20, thereby ensuring the safety of the vehicle during travelling without excessively affecting the vision of other vehicle drivers. Therefore, the interactive lamp 10 is disposed above the multifunctional lamp 20, and the multifunctional lamp 20 is disposed above the headlamp module 30, which can take into account the functionality of various lamps in the headlamp assembly 1000, the safety of the vehicle during travelling, and the aesthetics of the front end of the vehicle body.

As an optional embodiment of the present disclosure, referring to FIGS. 1 to 3, the interactive lamp 10 is arranged in a strip shape as a whole, and the interactive lamp 10 is configured to extend in the width direction of the vehicle and towards a middle position at the front end of the vehicle body.

It should be noted that the middle position at the front end of the vehicle body refers to the middle of the front end of the vehicle body in the width direction of the vehicle. The interactive lamp 10 is arranged in the strip shape as a whole, which improves the fashionable, minimalist, and continuous visual aesthetics of the interactive lamp 10. Meanwhile, the strip-shaped interactive lamp 10 extends in the width direction of the vehicle to the middle of the front end of the vehicle body, so that the interactive lamp 10 at the front end of the vehicle body is visible from the front and sides of the vehicle and at both long and short distances from the vehicle, which increases the display angle and display range of the interactive information of the interactive lamp 10, and also enables the interactive lamp 10 to provide more interactive information, thereby improving the visibility and aesthetics of the interactive lamp 10.

As an optional embodiment of the present disclosure, referring to FIGS. 2 to 4, the multifunctional lamp 20 is arranged in a strip shape as a whole, and the multifunctional lamp 20 is configured to be parallel to the interactive lamp 10.

It should be noted that, since the multifunctional lamp 20 is arranged in the strip shape as a whole, the overall visual aesthetics of the multifunctional lamp 20 is improved. The strip-shaped multifunctional lamp 20 is arranged to extend in the width direction of the vehicle, so that the multifunctional lamp 20 at the front end of the vehicle body is visible from the front and sides of the vehicle and at both long and short distances from the vehicle, which expands the display angle and display range of the multifunctional lamp 20. In this way, the daytime running lamp, the position lamp, and the turn signal lamp integrated in the multifunctional lamp 20 can be more easily identified by pedestrians and drivers of passing vehicles, thereby improving the safety of the vehicle during travelling. Meanwhile, the strip-shaped multifunctional lamp 20 often has a long length, which can facilitate the integration of the daytime running lamp, the position lamp, the turn signal lamp, and other functional lamps, so that the overall structure of the multifunctional lamp 20 is more compact and efficient.

As an optional embodiment of the present disclosure, referring to FIGS. 1, 2 and 10, the headlamp assembly 1000 further includes a lamp housing 50.

The lamp housing 50 is configured to be connectable with a vehicle body frame and/or a vehicle body panel of the vehicle.

The interactive lamp 10, the multifunctional lamp 20, and the headlamp module 30 are integrated and mounted in the lamp housing 50.

It should be noted that various lamps in the headlamp assembly 1000 on a single side of the front end of the vehicle body are mounted in one lamp housing 50, so that the arrangement of various lamps in the headlamp assembly 1000 has a more uniform and smooth appearance. Since the interactive lamp 10, the multifunctional lamp 20, the headlamp module 30, and other lamps are all integrated in a single lamp housing 50, the headlamp assembly 1000 can be better adapted to and coordinated with the structure of the front end of the vehicle body. The lamp housing 50 is connected with the vehicle body frame and/or the vehicle body panel or other vehicle body components, and the lamp housing 50 can be connected with the vehicle body in a variety of ways. For example, the lamp housing 50 can be fixedly connected with the vehicle body by various means, such as fastener connection, snap-fit connection, lap connection, and plug-in connection, so as to improve the mounting stability of the lamp housing 50. Meanwhile, the interactive lamp 10, the multifunctional lamp 20, and the headlamp module 30 are integrated and mounted in the lamp housing 50, which can reduce the required independent components, simplify the production process, and reduce the material and assembly costs, thereby reducing the weight of the headlamp assembly 1000 to a certain extent, and optimizing the weight distribution of the entire vehicle. And, the mounting of the single lamp housing 50 is more convenient and faster than the mounting of a plurality of independent lamp housings 50; meanwhile, the integral lamp housing 50 can protect the electrical components in the lamp housing 50 from moisture, dust, and the like, which is beneficial to improve the sealing performance and the durability of the vehicle. Multiple lamps sharing the single lamp housing 50 also helps improve the space utilization of the headlamp assembly 1000.

As an optional embodiment of the present disclosure, referring to FIGS. 1, 4, 5 and 6, the interactive lamp 10 includes a mounting plate 1011, a flexible circuit board 1012, a diffuser plate 1014, and an outer lens region.

The mounting plate 1011 is mounted on the lamp housing 50. The flexible circuit board 1012 is mounted on the mounting plate 1011 and includes light-emitting elements 1013 arranged in an array on an outer side thereof. The diffuser plate 1014 at least partially covers the outer side of the flexible circuit board 1012, and is configured to diffuse light emitted from the light-emitting elements 1013. The outer lens region is disposed on the lamp cover 40 and is assembled on an outer side of the diffuser plate 1014.

It should be noted that the mounting plate 1011 is mounted on the lamp housing 50, and can be fixed to the lamp housing 50 by various means, such as fasteners, snap-fit connection, and plug-in connection. The mounting plate 1011 may be configured as a curved shape, and may be configured with a multi-segment curved surface, which can be specifically designed according to the shape of the interactive lamp 10, so as to adapt to the shape of the front end of the vehicle body. The flexible circuit board 1012 is fixed on the mounting plate 1011, and the flexible circuit board 1012 may be configured as a comb-like shape, so that the flexible circuit board 1012 has a first structure arranged in the width direction of the vehicle body and having a comb-back profile, and a strip-shaped structure, such as a strip plate 10121, distributed in the vertical direction of the vehicle body and having a comb-teeth profile, to enable the shape of the surface of the flexible circuit board 1012 to conform to that of the surface of the mounting plate 1011. The light-emitting elements 1013 are arranged on the strip plate 10121 at uniform intervals, thereby realizing a matrix arrangement of the light-emitting elements 1013. The interactive lamp 10 can present interactive information in different colors and shapes by controlling the partial lighting, partial dimming, and light colors of the light-emitting elements 1013 arranged in a matrix.

Referring to FIGS. 1, 4, 5 and 6, it should be understood that the flexible circuit board 1012 may also have other arrangement forms. For example, a plurality of strip circuit boards are connected in series at one end to a rod that can communicate with each of the strip circuit boards, where the rod may be configured to be bent or not according to actual requirements, which also enables the flexible design of the flexible circuit board 1012. The diffuser plate 1014 is mainly configured to provide a more uniform lighting effect, improves the light beam distribution of the interactive lamp 10, and achieve the effect of light uniformity. The outer lens region is disposed on the outer side of the diffuser plate 1014, that is, on the side of the diffuser plate 1014 facing the front of the vehicle. The outer lens region is configured to protect the internal structure of the interactive lamp 10, preventing rain and dust from entering the interior of the interactive lamp 10, where the outer lens region is a part of the structure of the lamp cover 40. It should be further noted that the light emitted from the light-emitting elements 1013 is diffused by the diffuser plate 1014 to form a uniform surface light source, thereby presenting the uniform display effect of the interactive lamp 10. In this way, the interactive information displayed by the interactive lamp 10 has a relatively high image quality, delivering an aesthetic appeal.

Referring to FIGS. 1, 4 and 5 to 7, as an optional embodiment of the present disclosure, a distance between the light-emitting elements 1013 and the diffuser plate 1014 may be set according to actual requirements, for example, the distance is 5 mm. The light transmittance of the diffuser plate 1014 may be selected from 60% to 80%. By configuring the flexible circuit board 1012 in a comb-like shape, that is, the strip plates 10121 of the flexible circuit board 1012 are arranged at uniform intervals, the heat dissipation performance of the flexible circuit board 1012 can be improved, so that more and denser light-emitting elements 1013 can be arranged on the flexible circuit board 1012, which prevents the density of the light-emitting elements 1013 from being limited due to the heat dissipation of the flexible circuit board 1012. If the light-emitting elements 1013 are arranged too sparsely, the pixel points of the interactive information presented by the interactive lamp 10 may be affected, and thus the image quality of the interactive information presented by the interactive lamp 10 may be affected. In the present disclosure, by using the flexible circuit board 1012 with faster heat dissipation, the problem that the light-emitting elements 1013 cannot be arranged too densely can be solved, thereby improving the clarity, color depth, detail rendering, and aesthetic appeal of the text or image displayed by the interactive lamp 10.

Referring to FIGS. 1 and 2, as an optional embodiment of the present disclosure, the multifunctional lamp 20 includes a light-emitting source 2021 with an adjustable color, and at least a portion of the light-emitting source 2021 differs in light color from other portions thereof.

It should be noted that the light-emitting source 2021 of the multifunctional lamp 20 includes at least two light-emitting elements with different light colors, and the light-emitting elements with different light colors can be independently controlled, so that the multifunctional lamp 20 can provide different light colors and/or brightness as required, and provide more usage scenarios and custom options. For example, when used as the turn signal lamp, the multifunctional lamp 20 may be switched to lighting up a yellow light-emitting element to distinguish it from other functional lamps. Meanwhile, the light-emitting elements with different light colors can create different atmosphere and visual effects, and can provide more comfortable driving experience for the vehicle owner.

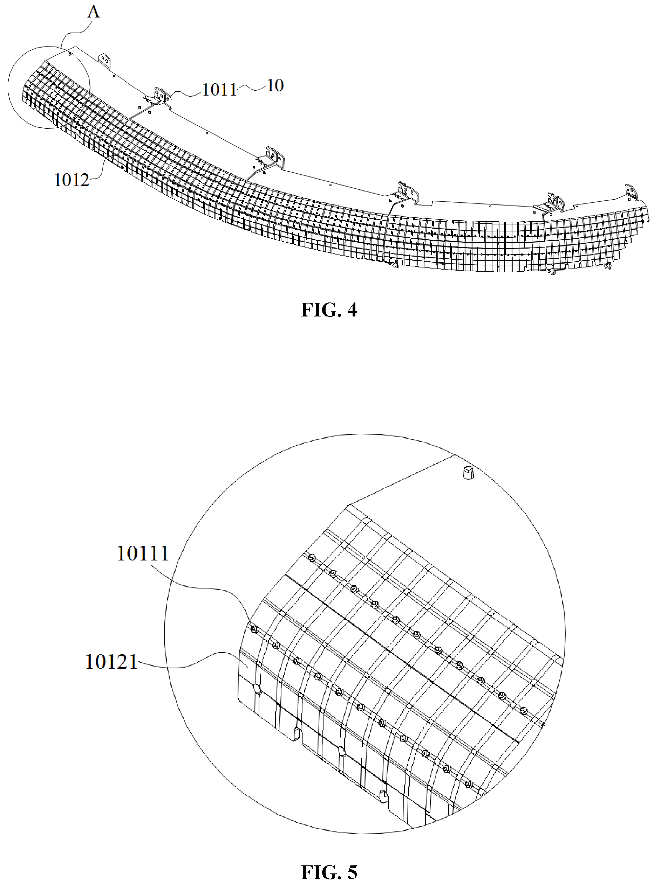

As an optional embodiment of the present disclosure, referring to FIGS. 4 and 5, the mounting plate 1011 is provided with a positioning unit 10111 configured to position and mount the flexible circuit board 1012 relative to the mounting plate 1011.

It should be noted that the positioning unit 10111 includes a positioning post, a positioning pin, or a positioning hole, and stable mounting of the flexible circuit board 1012 is realized through the positioning unit 10111. For example, the flexible circuit board 1012 includes a plurality of strip plates 10121 distributed at uniform intervals along a line, and the light-emitting elements 1013 are arranged at uniform intervals in the length direction of each of the strip plates 10121, so that each strip plate 10121 can be positioned on the mounting plate 1011 through the corresponding positioning unit 10111 to prevent a part of the structure of the flexible circuit board 1012 from driving the light-emitting elements 1013 to move and affecting the normal use of the interactive lamp 10. Meanwhile, outer sides of all the strip plates 10121 can be pressed and fixed through a retainer 10122 to prevent the strip plates 10121 of the flexible circuit board 1012 from shaking when the vehicle is travelling, thereby improving the mounting stability of the flexible circuit board 1012.

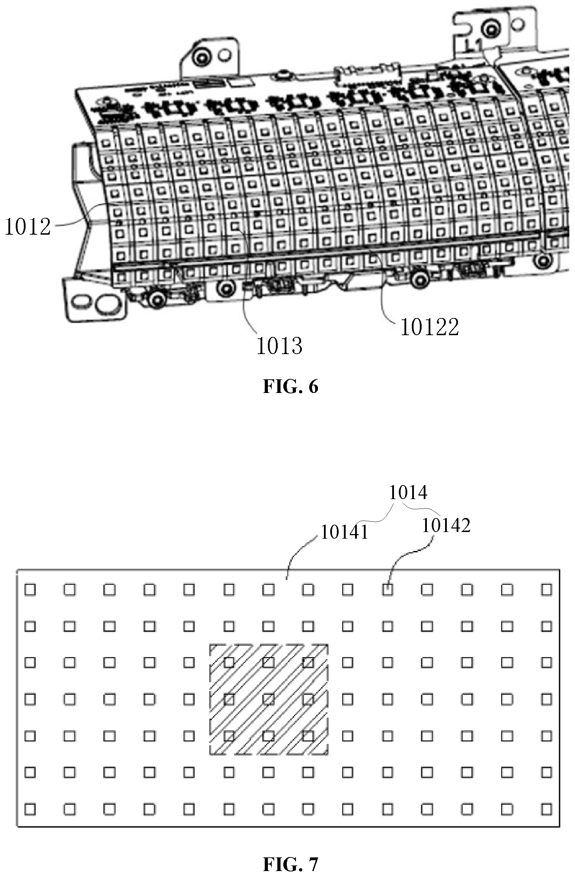

As an optional embodiment of the present disclosure, referring to FIG. 7, the diffuser plate 1014 is provided with a light-blocking coating on a portion of an outer side and/or an inner side thereof, where the portion with the light-blocking coating forms a light-shielding region 10141, and a portion without the light-blocking coating forms light-transmitting regions 10142, and multiple of the light-transmitting regions 10142 are arranged corresponding to a single light-emitting element 1013.

It should be noted that, by providing the light-blocking coating on the diffuser plate 1014, the light-shielding region 10141 and the light-transmitting regions 10142 are formed on the diffuser plate 1014. The light-transmitting regions 10142 each have the same size and are arranged at uniform intervals in an array. Multiple of the light-transmitting regions 10142 correspond to the single light-emitting element 1013, so that the array density of the light-transmitting regions 10142 is greater than that of the light-emitting elements 1013. The light-blocking coating can shield the dispersed stray light by dividing the light-transmitting region 10142 into a plurality of independent pixel points, so that the light-transmitting region 10142 with unclear boundaries originally becomes a pixel array with clear boundaries and ordered arrangement, thereby presenting a high-pixel display effect, and further making the interactive information displayed by the interactive lamp 10 more clearly visible.

As an optional embodiment of the present disclosure, the outer lens region is provided with a plating or a coating on an inner side thereof, and the plating or the coating at least partially covers an outer side of the light-transmitting regions 10142 of the diffuser plate 1014.

It should be noted that, by providing the plating or the coating on the inner side of the outer lens region, only when the light-emitting elements 1013 emit a relatively strong light, the light can pass through the plating or the coating to form the interactive pattern or text displayed by the interactive lamp 10. When the light-emitting elements 1013 do not emit light, the plating or the coating provided on the inner side of the outer lens region can block the view of a person outside the vehicle, so that the person outside the vehicle cannot see the structure of the interactive lamp 10 inside the outer lens region through the plating or the coating, let alone the light-emitting elements 1013 densely arranged in an array inside the interactive lamp 10, thereby improving the visual effect of the headlamp assembly 1000 when the interactive lamp 10 is turned off. The outer lens region is made of a light-transmitting material, and the plating or the coating is configured to allow the light with the brightness exceeding a preset threshold to pass through. Only when the intensity of the light emitted by the light-emitting elements 1013 reaches a preset intensity or above, the light can pass through the plating or the coating, such as a steel-plated film with a light transmittance of 20% to 30%. The plating or the coating is provided on the inner side of the outer lens region, so that the erosion of the plating or the coating by the external environment of the interactive lamp 10, such as rain or dust, can be prevented or reduced, thereby ensuring the service life of the interactive lamp 10.

As an optional embodiment of the present disclosure, referring to FIGS. 1, 8 and 9, the multifunctional lamp 20 includes a light-emitting source 2021, a light source scattering channel 2022, and a light-blocking enclosed cavity 2023.

The light-emitting source 2021 is mounted on the lamp housing 50.

The light source scattering channel 2022 is mounted at a light-emitting end of the light-emitting source 2021, and the light source scattering channel 2022 is configured such that one end serves as a light source receiving end 20221 and the other end serves as a light source scattering end 20222.

The light-blocking enclosed cavity 2023 is disposed around the light source scattering channel 2022, with the light source scattering end 20222 of the light source scattering channel 2022 protruding out of an outlet of the light-blocking enclosed cavity 2023.

It should be noted that the light-emitting source 2021 includes a circuit board, light-emitting elements arranged on the circuit board, and a driver for driving the light-emitting elements to light up, and other components. The light-blocking enclosed cavity 2023 is disposed around the light source scattering channel 2022, and the light-blocking enclosed cavity 2023 can block at least part or all of the stray light. As shown in FIG. 1, the black arrow indicates that the light beam emitted by the light-emitting source 2021 enters the light source scattering channel 2022 through the light source receiving end 20221, and is refracted multiple times, and then exits from the light source scattering end 20222. The light source scattering channel 2022 can refract the light beam from the light-emitting source multiple times, and a refracting surface 20223 on the light source scattering channel 2022 is provided with a light-uniformizing pattern, which can realize the light uniformity effect of the light source scattering channel 2022 on the light beam. The light source scattering end 20222 protrudes out of the outlet of the light-blocking enclosed cavity 2023, and the light source scattering end 20222 is flat and presents the aesthetic appeal of floating light. The light-emitting source 2021 is provided in multiple groups, and the light source scattering channel 2022 includes multiple sections. A gap 20224 is provided between the sections of the light source scattering channel 2022, and a light-shielding plate is provided in the gap 20224, so that the light between the sections of the light source scattering channel 2022 does not affect each other. Each section of the light source scattering channel 2022 corresponds to one group of the light-emitting sources 2021. At least part of the light-emitting sources 2021 have light-emitting elements with different colors. In addition, the light-emitting elements with the same light-emitting color in each group of the light-emitting sources 2021 can be independently controlled, and the light-emitting elements with different light colors can also be independently controlled, so that the multifunctional lamp 20 can provide different light colors and/or brightness as required, and provide more usage scenarios and custom options. For example, the light-emitting elements corresponding to a certain section or sections of the light source scattering channel 2022 are lit, or the lit light-emitting elements differ in color or brightness, e.g., the light-emitting elements emit white light, yellow light, or light with other colors. The light-emitting elements with various light colors are alternately arranged at uniform intervals, so that the multifunctional lamp 20 can be switched among at least the daytime running lamp, the position lamp, and the turn signal lamp to meet the usage requirements of the multifunctional lamp 20.

As an optional embodiment of the present disclosure, referring to FIGS. 1 and 2, a light-shielding member 3031 is provided on a side of the headlamp module 30 away from the multifunctional lamp 20, and the light-shielding member 3031 can shield a lower side of the headlamp module 30 in a light-exiting direction, which, in cooperation with the shielding of an upper side of the headlamp module 30 in the light-exiting direction by a lower portion of the light-blocking enclosed cavity 2023, can reduce the stray light emitted by the headlamp module 30. Meanwhile, a distance between the headlamp module 30 and the lamp cover 40 is greater than a preset distance, so as to avoid or reduce glare and improve the safety of the vehicle during travelling at night.

As an optional embodiment of the present disclosure, referring to FIG. 1, the light-blocking enclosed cavity 2023 includes at least a lower decorative plate 20231 and an upper decorative plate 20232.

The lower decorative plate 20231 and the upper decorative plate 20232 are spaced apart from each other, with a gap forming the light-blocking enclosed cavity 2023.

The light-emitting source 2021 and the light source scattering channel 2022 are disposed in the gap.

The light source scattering end 20222 of the light source scattering channel 2022 protrudes out of the gap.

It should be noted that the light-blocking enclosed cavity 2023 includes the upper decorative plate 20232 and the lower decorative plate 20231, and may further include other baffles, so as to enclose the light-emitting source 2021 and the light source scattering channel 2022. The light-emitting source 2021 may be mounted on the upper decorative plate 20232, and the light source scattering channel 2022 may be mounted on the lower decorative plate 20231. The light source scattering end 20222 protrudes out of the gap, so that the light source scattering end 20222 in a flat shape presents the aesthetic appeal of floating light, so that the light from the light-emitting source 2021 can be more evenly dispersed on an illumination surface, reducing the occurrence of local brightness being excessively high or excessively low. The light source scattering channel 2022 is arranged in the width direction of the vehicle, and the light source scattering end 20222 protruding out of the outlet of the light-blocking enclosed cavity 2023 presents a streamlined shape, can better match the overall design of the headlamp assembly 1000 of the vehicle, and in turn can be more easily integrated into the overall design of the vehicle, and provide the vehicle with a modern and futuristic appearance.

Further, referring to FIG. 1, the mounting plate 1011 and the light-blocking enclosed cavity 2023 can both be made of a heat dissipation material to improve the heat dissipation effect of the headlamp assembly 1000, where the light-blocking enclosed cavity 2023 and the lamp housing 50 are connected by fasteners or other ways that meet the usage requirements.

As an optional embodiment of the present disclosure, referring to FIGS. 1, 8 and 9, the light-emitting source 2021 includes a first light source and a second light source.

The light source scattering channel 2022 includes a first light guide portion 202201 disposed corresponding to the first light source and a second light guide portion 202202 disposed corresponding to the second light source, and the first light guide portion 202201 and the second light guide portion 202202 are arranged in the width direction of the vehicle body.

It should be noted that the light colors of the first light source and the second light source can be configured to be the same or different from each other, and the first light source and the second light source can be configured to be independently controllable to realize individual lighting of the first light source or the second light source, or simultaneous lighting of the first light source and the second light source. The light-emitting source 2021 is divided into the first light source and the second light source, but it should be understood that the light-emitting source 2021 may be divided into the first light source, the second light source, a third light source, a fourth light source, or more light sources. The light source scattering channel 2022 may also include a third light guide portion disposed corresponding to the third light source, and a fourth light guide portion disposed corresponding to the fourth light source, or more light guide portions. By making the first light source correspond to the first light guide portion 202201, and the second light source correspond to the second light guide portion 202202, the vehicle lamp can emit distinguishable light. The first light guide portion 202201 and the second light guide portion 202202 are arranged in the width direction of the vehicle body. It should be understood that the first light source is also arranged in the width direction of the vehicle body correspondingly to the first light guide portion 202201, and the second light source is also arranged in the width direction of the vehicle body correspondingly to the second light guide portion 202202, so as to form a strip-shaped or streamlined vehicle lamp, which is beneficial to improve the aesthetic appeal of the vehicle lamp, and enhance the function diversity of the vehicle lamp, which, for example, can be used as the daytime running lamp, the position lamp, or other functional lamp of the vehicle.

As an optional embodiment of the present disclosure, each of the first light source and the second light source includes a circuit board, a light-emitting element, a driver chip, and a controller. A plurality of light-emitting elements are disposed on the circuit board and electrically connected to the circuit board. The driver chip is disposed on the side of the circuit board 21 and electrically connected to the corresponding light-emitting elements through the circuit board. The controller is electrically connected to the driver chip, and the controller is configured to control independent lighting of the corresponding light-emitting elements, so as to expand the function of the light-emitting source 2021. It should be understood that the first light source and the second light source may also have common components, for example, the first light source and the second light source may share a common controller.

Further, the circuit board of the light-emitting source 2021 is provided in multiple sections in the width direction of the vehicle body to adapt to the shape of the front end of the vehicle body, so that the vehicle lamp located at the front end of the vehicle body can create a streamlined lighting atmosphere.

As an optional embodiment of the present disclosure, referring to FIG. 1, the first light source includes only white LEDs, and the second light source includes white LEDs and yellow LEDs arranged in a staggered manner, so that the light-emitting source 2021 and the light source scattering channel 2022 are used in cooperation to provide an integrated function of the daytime running lamp, the turn signal lamp, and the position lamp. The second light source corresponds to the relatively long second light source scattering channel 2022. For example, the yellow LEDs, when lit alone, may serve as the turn signal lamp, and the white LEDs of the first light source and the white LEDs of the second light source, when lit simultaneously, may serve as the daytime running lamp and the position lamp. Meanwhile, the brightness of the first light source and the brightness of the second light source can be controlled according to actual requirements. The vehicle lamp is provided in two groups that are symmetrically arranged at the front end of the vehicle body to meet the usage requirements.

Referring to FIG. 1, FIG. 3, and FIGS. 11 to 14, as an optional embodiment of the present disclosure, the lamp housing 50 extends from a side of the front end of the vehicle body to the middle of the front end of the vehicle body, a vehicle lamp assembly is mounted at a front end of the lamp housing 50, a plurality of mounting legs 50110 are provided on a side of the lamp housing 50 away from the vehicle lamp assembly, and are at least configured to connect a front end frame and a fender bracket of the vehicle, where the vehicle lamp assembly includes the interactive lamp 10, the multifunctional lamp 20, and the headlamp module 30. In this structure, the plurality of mounting legs 50110 are disposed on the lamp housing 50, and are respectively connected to the front end frame and the fender bracket of the vehicle, where the fender bracket is a reliable fixing part on a side of the front end of the vehicle body, and the front end frame is a reliable fixing part in the middle of the front end of the vehicle body. The mounting legs 50110 are fixedly connected to these two parts, enabling reliable mounting of the headlamp.

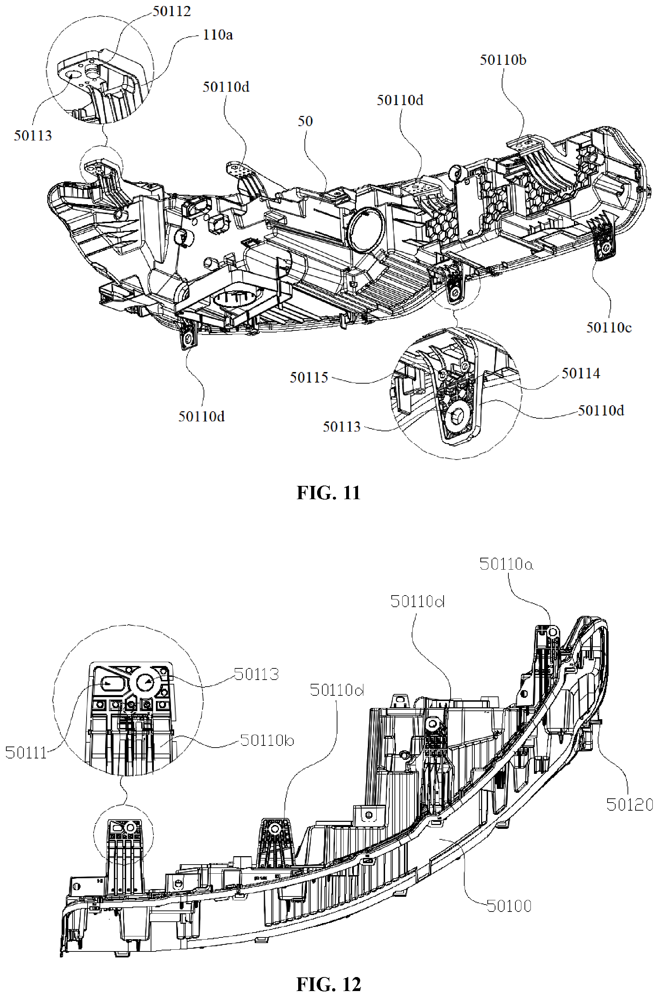

In a specific embodiment of the present disclosure, referring to FIGS. 11 to 14, at least part of the mounting legs 50110 are provided with second positioning holes 50111 or positioning pins 50112 for limiting the position of the headlamp on the vehicle. The mounting legs 50110 are further provided with mounting holes 50113 for fixedly mounting the headlamp. By providing the second positioning holes 50111 or the positioning pins 50112 on part of the mounting legs 50110, it is convenient to place the headlamp at a designated position of the vehicle, and once the headlamp is placed at the designated position, the mounting holes 50113 naturally remain aligned in place, and at this time, the headlamp can be fixed by means of mounting bolts. The second positioning hole 50111 or the positioning pin 50112 only needs to be disposed on some important mounting legs 50110, and the mounting hole 50113 needs to be disposed on each of the mounting legs 50110.

The structure of the headlamp assembly 1000 is very large, so it cannot be mounted as easily as some small components, but needs to be positioned and then mounted. In order to achieve reliable positioning of the headlamp, in the above embodiments, the second positioning holes 50111 or the positioning pins 50112 are provided on the mounting legs 50110. In specific configurations, when the mounting leg 50110 is cooperated with a sheet metal part, where it is inconvenient to provide a positioning protrusion on the sheet metal part itself, but it is convenient to form a hole in the sheet metal part, the positioning pin 50112 may be provided on the mounting leg 50110, such as a first mounting leg 50110a described below. When the mounting leg 50110 is cooperated with an injection-molded part, where it is not only convenient to provide a positioning protrusion on the injection-molded part, but also convenient to form a hole in the injection-molded part, the positioning protrusion or the hole may be provided on the mounting leg 50110 as required. In addition to the material of the part that is cooperated with the mounting leg 50110, it is necessary to consider a mounting and cooperation direction of the mounting leg 50110 with respect to the fender bracket or the front end frame during mounting, so as to ultimately select an appropriate manner to provide the second positioning hole 50111 or the positioning pin 50112.

For different shapes and structures of the headlamp assembly 1000, the positions of the mounting legs 50110 are different. In order to further illustrate the details of the mounting legs 50110, the positions, structures, and cooperation manners of some common mounting legs 50110 will be described below according to a specific embodiment for reference.

In a specific embodiment of the present disclosure, referring to FIG. 1, FIG. 3, and FIGS. 10 to 14, the mounting legs 50110 include the first mounting leg 50110a. The first mounting leg 50110a is disposed at an upper end of the lamp housing 50 located at a side of the front end of the vehicle body, with the positioning pin 50112 on the first mounting leg 50110a forming a positioning fit with a through hole of the fender bracket, so as to limit the displacement of the lamp housing 50 in the length direction and the width direction of the vehicle. The specific structure of the first mounting leg 50110a is shown in the enlarged area at the upper left corner in FIG. 11. The positioning pin 50112 on the first mounting leg 50110a and the through hole in the fender bracket are precisely positioned. When the headlamp is placed on the vehicle, the cooperation of the positioning pin 50112 and the through hole limits the movement of the headlamp in the X direction and the Y direction. And, when the positioning pin 50112 is inserted into the through hole, the first mounting leg 50110a rests on the fender bracket, which limits the movement of the lamp housing 50 in the negative Z direction.

The reason for using the first mounting leg 50110a for precise positioning is that, for a vehicle, the cooperation between the fender and the vehicle lamp on a side of the front end of the vehicle body is particularly important, and if a large deviation is introduced during the mounting, it may result in a large gap herein, which affects the performance, texture, and aesthetic appeal of the vehicle. When the first mounting leg 50110a and the fender bracket are precisely positioned, precise cooperation between the headlamp and the fender can be achieved.

In a specific embodiment of the present disclosure, the mounting legs 50110 include a second mounting leg 50110b. The second mounting leg 50110b is disposed at the upper end of the lamp housing 50 located in the middle of the front end of the vehicle body, with the second positioning hole 50111 on the second mounting leg 50110b being a waist-shaped hole, and the waist-shaped hole in a width direction forms a positioning fit with a positioning protrusion on the front end frame in the length direction of the vehicle. The specific structure of the second mounting leg 50110b is shown in the enlarged area in FIG. 12. Since the structure of the headlamp is large, and the lamp housing 50, the fender bracket, and the front end frame all have certain machining tolerances, the second positioning hole 50111 on the second mounting leg 50110b is designed as a waist-shaped hole, so that it can be cooperated with the positioning protrusion on the front end frame. The waist-shaped hole limits the movement of the lamp housing 50 in the X direction, while allowing the lamp housing 50 to move slightly in the Y direction.

The above first mounting leg 50110a and the second mounting leg 50110b, when performing positioning, serve as main support parts to support the headlamp assembly 1000. Thus, in a specific embodiment of the present disclosure, the first mounting leg 50110a and the second mounting leg 50110b may be provided with reinforcing ribs to increase the strength thereof. The structures of the reinforcing ribs can be clearly seen from FIG. 11, which can further improve the reliability of the headlamp assembly 1000 during mounting.

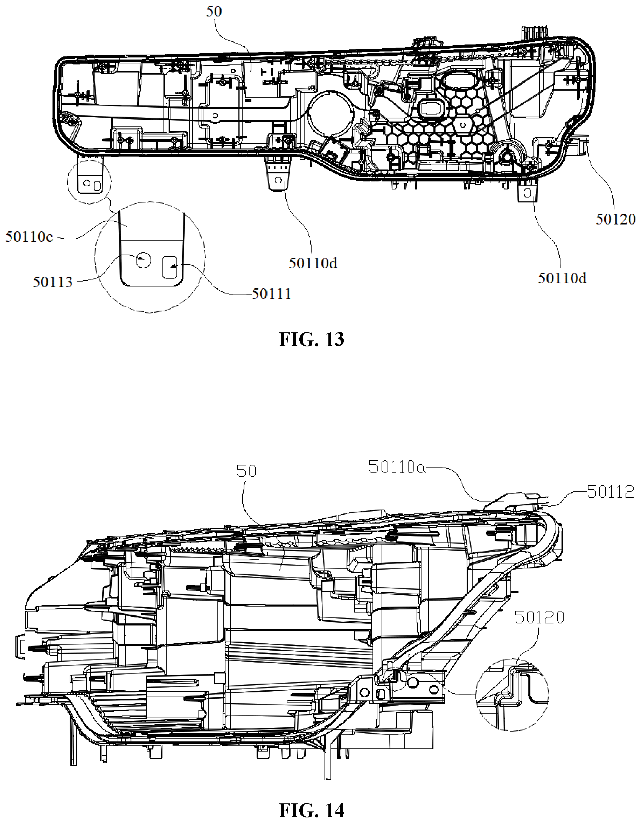

In a specific embodiment of the present disclosure, the mounting legs 50110 include a third mounting leg 50110c. The third mounting leg 50110c is disposed at a lower end of the lamp housing 50 located in the middle of the front end of the vehicle body, with an upper edge of the second positioning hole 50111 in the third mounting leg 50110c rests on the positioning protrusion of the front end frame. The specific structure of the third mounting leg 50110c is shown in the enlarged area in FIG. 13. The cooperation of the second positioning hole 50111 in the third mounting leg 50110c and the positioning protrusion limits the movement of the lamp housing 50 in the negative Z direction, and meanwhile, the third mounting leg 50110c itself abuts against the front end frame, which also limits the movement of the lamp housing 50 in the negative X direction.

In a specific embodiment of the present disclosure, the mounting legs 50110 include a fourth mounting leg 50110d, which is provided only with a mounting hole 50113. In addition to the above mounting leg 50110 for positioning, considering that the structure of the headlamp assembly 1000 is relatively large, more fourth mounting legs 50110d need to be added to ensure the fixed connection. A plurality of fourth mounting legs 50110d may be provided, and specific positions thereof may be arranged according to actual situations. The fourth mounting legs 50110d do not necessarily need to be fixed on the fender bracket or the front end frame, but can be fixedly mounted on other sheet metal parts of the vehicle, and the number of the fourth mounting legs 50110d can be set as required.

In a specific embodiment of the present disclosure, as shown in FIG. 11, a total of four fourth mounting legs 50110d are provided, and have the specific mounting form as follows.

For example, one fourth mounting leg 50110d is provided at the lower end of the lamp housing 50 on the side of the front end of the vehicle body, and this fourth mounting leg 50110d, the first mounting leg 50110a, the second mounting leg 50110b, and the third mounting leg 50110c are respectively located at four corners of the lamp housing 50.

For example, two fourth mounting legs 50110d are arranged at an interval at the upper part of the lamp housing 50 located between the side of the front end of the vehicle body and the middle of the front end of the vehicle body. For the headlamp assembly 1000, the main load-bearing points are at the upper mounting legs 50110. Thus, with the addition of these two fourth mounting legs 50110d, a total of four mounting legs 50110 are disposed at the upper part of the headlamp. It can be understood that all of the four mounting legs 50110 can be provided with reinforcing ribs to increase the strength thereof.

For example, an additional fourth mounting leg 50110d is provided at a lower middle of the lamp housing 50 located between the side of the front end of the vehicle body and the middle of the front end of the vehicle body. As described above, the entire structure of the headlamp assembly 1000 is very large. Only two mounting legs 50110, i.e., one third mounting leg 50110c and one fourth mounting leg 50110d, are provided at the lower part of the headlamp assembly 1000 on two sides. In order to ensure the reliable fixation of the headlamp assembly 1000, another fourth mounting leg 50110d is further provided in the middle of the lower part of the headlamp assembly 1000, which further improves the fixation effect.

It can be understood that other fourth mounting legs 50110d may be provided to ensure the reliability of the mounting of the headlamp. Moreover, not all of these fourth mounting legs 50110d are necessarily fixedly connected to the fender bracket or the front end frame, but these fourth mounting legs 50110d may be fixedly connected to other fixing components on the vehicle body according to their actual positions.

In a specific embodiment of the present disclosure, the lamp housing 50 further includes a boss 50120, which is disposed in the middle or bottom of the lamp housing 50 located at a side of the front end of the vehicle body, a notch corresponding to the boss 50120 is disposed on the fender bracket or the sheet metal part of the vehicle, and the boss 50120 rests on the notch. The specific structure of the boss 50120 is shown in the enlarged area in FIG. 14. The purpose of providing the boss 50120 is to effectively provide support for the headlamp before positioning the headlamp assembly 1000, which further facilitates the mounting of the headlamp assembly 1000.

There are various structures of the boss 50120, such as an L shape and a square shape. Regardless of the structure, the boss 50120 can preferably provide two support surfaces, one of which limits the downward movement of the lamp housing 50, and the other of which limits the movement of the lamp housing 50 in the negative X direction. The reason for this configuration is that the headlamp assembly 1000 is generally mounted from the front of the vehicle during assembly, and the boss 50120 with this structure may make the assembly more convenient.

A mounting manner of the headlamp assembly 1000 will be briefly described below with reference to specific embodiments. During the mounting of the headlamp assembly 1000, firstly, the headlamp assembly 1000 is lifted to the front of the front end of the vehicle body, such that the boss 50120 on the lamp housing 50 rests on the notch provided on the fender bracket or the sheet metal part of the vehicle. Secondly, the positioning pin 50112 on the first mounting leg 50110a of the headlamp assembly 1000 is inserted into the through hole on the fender bracket to achieve precise positioning. Thirdly, the second mounting leg 50110b and the third mounting leg 50110c of the headlamp assembly 1000 are placed on the positioning protrusions of the front end frame, and at this time, the headlamp assembly 1000 has been placed in its mounting position. Finally, bolts are tightened into all the mounting holes 50113 to complete the mounting of the headlamp assembly 1000.

Referring to FIG. 11, in a specific embodiment of the present disclosure, the mounting leg 50110 is provided with a fragile portion 50114. The fragile portion 50114 refers to a relatively weak portion on the mounting leg 50110 that is first broken when subjected to an external force. The front end of the vehicle body is the most common collision portion in accidents, and by providing the fragile portion 50114 on the mounting leg 50110, the fragile portion 50114 can be broken at the first moment upon a collision, which provides a certain buffering effect, thereby reducing the injury to pedestrians. There are various structures of the fragile portion 50114, for example, a plurality of holes may be arranged at intervals on the mounting leg 50110, or a plurality of recessed regions may be provided.

In a specific embodiment of the present disclosure, the fragile portion 50114 is disposed on the mounting leg 50110 that forms an angle with the length direction of the vehicle. The main direction of force on the vehicle lamp comes from the front, so the fragile portion 50114 is provided on the mounting leg 50110 that forms an angle with the length direction of the vehicle, which has a better effect. In this embodiment, the four upper mounting legs 50110 are all parallel to the length direction of the vehicle, so there is no need to provide the fragile portions 50114 thereon, enabling more reliable fixation for them. The three lower mounting legs 50110 may be selectively provided with the fragile portions 50114, for example, two or three fragile portions 50114 may be provided.

Referring to FIG. 2, in a specific embodiment of the present disclosure, the mounting leg 50110 is provided with a connecting portion 50115 on a side of the fragile portion 50114 close to the lamp housing 50, for mounting a spare mounting leg 50110. The connecting portion 50115 may be a threaded hole, a counter bore, or a snap-fit, and is mainly configured to mount the spare mounting leg 50110. When the fragile portion 50114 is broken due to the collision, since the lamp housing 50 and all the mounting legs 50110 are of an integrated structure, replacing the entire lamp housing 50 is too costly. Thus, the connecting portion 50115 is provided such that, the mounting leg 50110, when broken at the fragile portion 50114, can be simply replaced with a spare mounting leg 50110, thereby reducing the maintenance costs.

Referring to FIGS. 1, 2 and 15, a headlamp seal 60 is disposed between the headlamp assembly 1000 and a front hood. The headlamp seal 60 is configured to form a seal between the headlamp assembly 1000 and the front hood, and the headlamp seal 60 has a variable cross-section. This type of seal has a varying cross-sectional design that enables it to accommodate and conform to surfaces with different shapes, including curved portions. The cross-section of the seal can be designed according to the change in the gap between the headlamp assembly 1000 and the front hood, so that the corresponding seal can be directly used for a specific vehicle model to improve the sealing effect on the curved portions. During production and manufacturing, since the headlamp seal 60 has a variable cross-section, it cannot be produced by an extrusion process, and the headlamp seal 60 can be produced by an injection-molding process. The headlamp seal 60 is generally made of a rubber material.

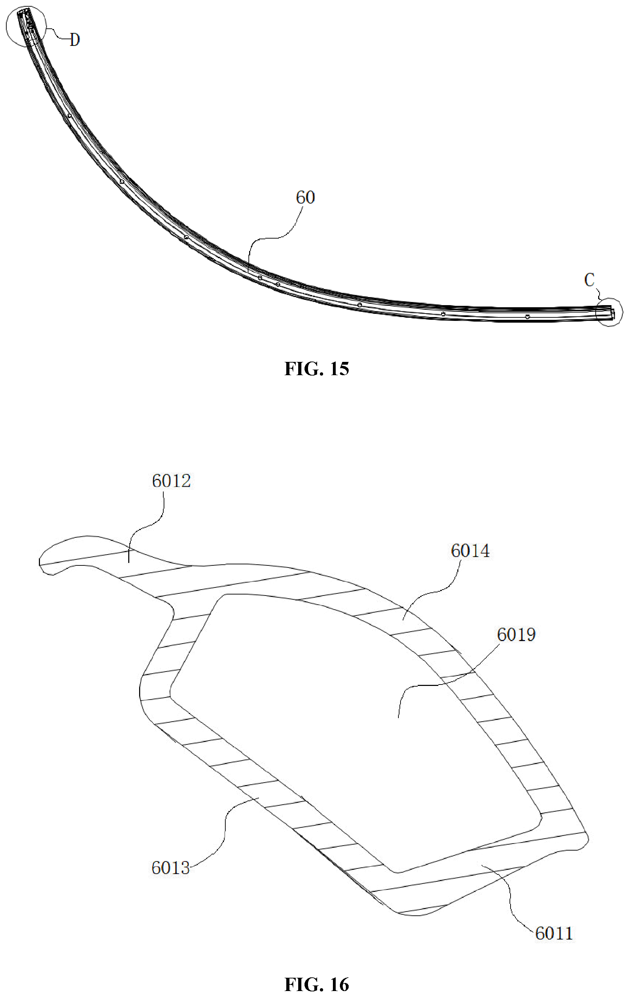

As shown in FIG. 15, a cross-sectional shape and/or a cross-sectional area of the headlamp seal 60 gradually changes from a first end to a second end of the headlamp seal 60, where the first end is located close to the middle of the vehicle in the width direction, and the second end is located close to the fender of the vehicle. The headlamp seal 60 is arranged in the width direction of the vehicle. In this way, the cross-sectional shape of the seal is varied to adapt to the contour of the headlamp assembly 1000, while enabling the sealing performance of the seal more suitable for the vehicle at different positions, especially at the curved portions.

As shown in FIG. 15, the headlamp seal 60 is arranged in the width direction of the vehicle, and the headlamp seal 60 gradually bends rearward from the first end to the second end. The aforementioned "bend" refers to that the headlamp seal 60 has a bent shape in a natural state, so that the headlamp seal 60 does not need to be further bent when sealing the curved headlamp assembly 1000, which avoids local non-conformity caused by local deformation of the headlamp seal 60 during bending. The bent shape of the seal itself can better adapt to the curved surface of the headlamp assembly 1000 or other components, thereby improving the sealing performance and reducing the potential water leakage or dust ingress. Meanwhile, since the seal already has the required bent state in advance, there is no need to perform complex adjustment or bending on the seal during mounting, which simplifies the mounting process and improves the efficiency.

As shown in FIG. 16, the headlamp seal 60 is provided with a strip-shaped cavity 6019 in its length direction. A hollow seal has a lighter weight than a solid seal. This is advantageous in applications such as vehicles where an overall weight needs to be reduced, helping to improve fuel efficiency. The hollow design can provide greater elasticity and deformation ability, so that the seal is easier to adapt to irregular surface shapes, thereby improving the sealing effect. During injection-molding of the strip-shaped cavity 6019, strip-shaped cores can be provided in cavities of upper and lower molds, and after the injection-molding is completed, the strip-shaped cavity 6019 can be formed by pulling the cores from both ends. Since the headlamp seal 60 is elastic, the cores can be pulled through elastic deformation even if the headlamp seal 60 has a variable cross-section.

In a specific embodiment of the present disclosure, a cross-sectional shape and/or a cross-sectional area of the strip-shaped cavity 6019 gradually changes from the first end to the second end of the headlamp seal 60. Since the headlamp seal 60 has a variable cross-section, the strip-shaped cavity 6019 disposed therein also has a corresponding variable cross-section. Matching with the variable cross-sectional headlamp seal 60, the variable cross-sectional strip-shaped cavity 6019 may better accommodate external strain, thereby providing better performance in sealing or connection applications.

As shown in FIG. 16, the headlamp seal 60 includes a lamp assembly sealing surface 6011, a hood sealing edge 6012, a mounting surface 6013, and an arcuate surface 6014.

The lamp assembly sealing surface 6011 is configured to fit against the headlamp assembly 1000. The lamp assembly sealing surface 6011, as a part of the headlamp seal 60, is specially designed to seal against the headlamp assembly 1000. The lamp assembly sealing surface 6011 functions to provide a seal, ensuring an effective seal between the headlamp assembly 1000 and other parts of the vehicle, so as to prevent moisture, dust, or other external elements from entering the interior of the headlamp assembly 1000.

The hood sealing edge 6012 is configured to fit against a lower side of a front end of the front hood. The hood sealing edge 6012 is specially designed to seal against the lower side of the front end of the front hood. Similar to the lamp assembly sealing surface 6011, the hood sealing edge 6012 functions to provide a seal, ensuring an effective seal formed between the lower side of the front end of the front hood and other parts of the vehicle, so as to prevent external elements from entering the interior of an engine compartment of the vehicle.

The mounting surface 6013 is configured to be mounted to the vehicle frame. The mounting surface 6013, as a part of the headlamp seal 60, is designed for being mounted to the vehicle frame. The mounting surface 6013 is a part of the headlamp seal 60 for positioning and mounting during assembly of the headlamp seal 60, the position of which determines the final mounting position of the seal.

The arcuate surface 6014 is disposed opposite to the mounting surface 6013. The hood sealing edge 6012 smoothly transitions to the arcuate surface 6014, and the arcuate surface 6014 and the hood sealing edge 6012 fit against the upper engine hood. The arcuate surface 6014, as a part of the headlamp seal 60, is designed as a curved or arc-shaped surface that adapts to the vehicle structure, so as to ensure that the seal can better conform to the shape of the vehicle structure when connected to the vehicle frame, and improve the sealing performance.

As shown in FIG. 16, the lamp assembly sealing surface 6011 includes a flange portion and a flat portion. A junction line between the flange portion and the flat portion is configured to fit against an upper edge of the headlamp assembly 1000. The flange portion, as a specific area of the lamp assembly sealing surface 6011, is generally in the shape of a protrusion or bulge. The flange portion is designed to provide additional support or sealing when fitting against the upper edge of the headlamp assembly 1000. The flange portion can generally conform to the shape of the headlamp assembly 1000 to ensure better conformability during sealing. The flat portion is adjacent to the flange portion with a junction line therebetween. The junction line is designed to ensure a smooth and effective transition of the sealing surface when fitting against the upper edge of the headlamp assembly 1000. Such a design helps prevent water or dust from entering the interior of the headlamp assembly 1000.

In a specific embodiment of the present disclosure, the lamp assembly sealing surface 6011 is always oriented towards the headlamp assembly 1000, and an angle between the lamp assembly sealing surface 6011 and an upper end surface of the headlamp assembly 1000 remains constant. Maintaining this constant orientation and angle can ensure a consistent sealing performance. This helps prevent moisture, dust, or other external elements from entering the interior of the headlamp assembly 1000.

In a specific embodiment of the present disclosure, a width direction of the hood sealing edge 6012 is always oriented towards the front hood, and the width direction of the hood sealing edge 6012 is always oriented towards the engine hood. Maintaining the width direction of the hood sealing edge 6012 towards both the front hood and the engine hood helps ensure an effective sealing provided in these critical areas. This is crucial for preventing moisture, dust, or other external elements from entering the interior of the engine compartment.

In a specific embodiment of the present disclosure, a length direction of the lamp assembly sealing surface 6011 is the same as a length direction of the upper end of the headlamp assembly 1000, and a length direction of the hood sealing edge 6012 is the same as a length direction of a front end plate of the front hood. This design ensures that the lamp assembly sealing surface 6011 can effectively cover the entire upper end of the headlamp assembly 1000, thereby providing a comprehensive sealing and support. Meanwhile, this design also ensures that the hood sealing edge 6012 provides a continuous and consistent sealing along the front end plate of the front hood, preventing external elements from entering the engine compartment.

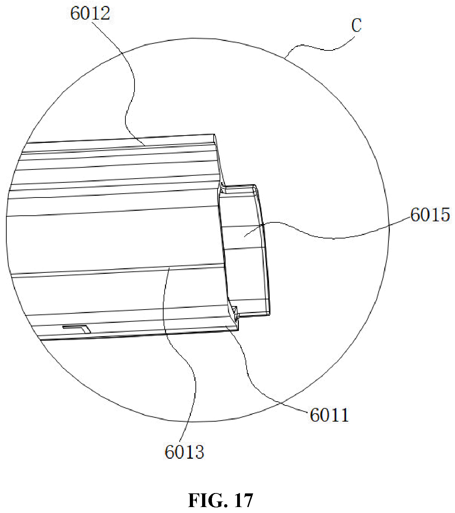

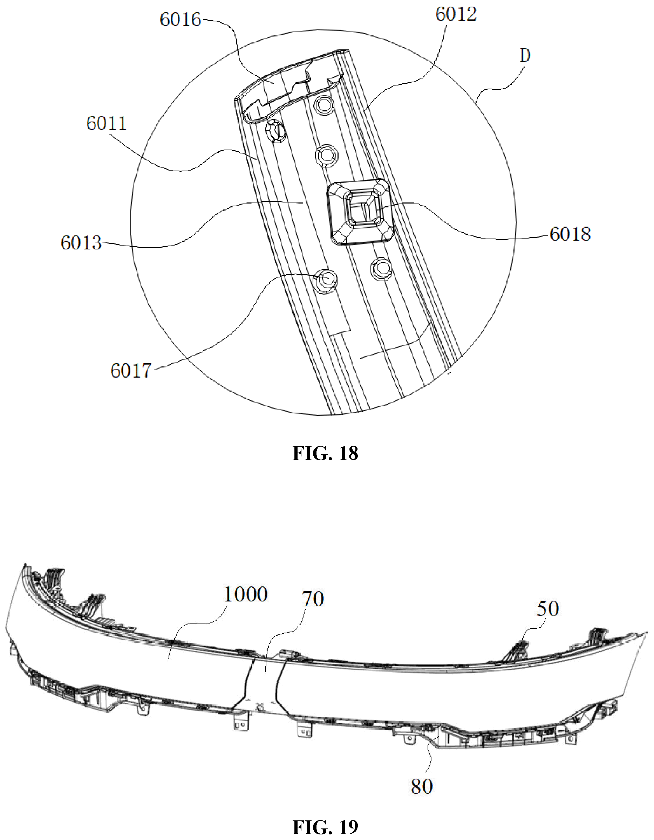

As shown in FIG. 17, a first limiting edge 6015 protrudes from the first end in the length direction of the headlamp seal 60, and a step is formed between the first limiting edge 6015 and the arcuate surface 6014. As shown in FIG. 18, a second limiting edge 6016 protrudes from the second end in the length direction of the headlamp seal 60, and the first limiting edge 6015 is flush with the arcuate surface 6014. The first limiting edge 6015 and the second limiting edge 6016 are configured to limit and fix two ends of the headlamp seal 60 to prevent the two ends from warping.

As shown in FIG. 18, the mounting surface 6013 is provided, at a position thereof close to the second end, with a plurality of positioning protrusions 6017, and the mounting surface 6013 is provided, at a position thereof close to the second end, with an elastic plug 6018 for insertion into a mounting hole on the vehicle frame. The positioning protrusion 6017 is a structure disposed on the mounting surface 6013, and is generally in the form of a protruding column. These protrusions function to provide a positioning function to ensure that the assembly can be accurately aligned with corresponding holes or recesses of the vehicle frame or other components during mounting. The positioning protrusions 6017 may help ensure that the assembly maintains the proper position and orientation during mounting. The elastic plug 6018 is an elastic structure that can be inserted into a mounting hole on the vehicle frame. The elastic plug 6018 is designed to adapt to and fill the mounting hole on the vehicle frame, providing a tight connection. This helps ensure that the assembly is securely fixed to the vehicle frame after mounting, and may also provide shock absorption and loosening prevention.

Referring to FIGS. 1, 2 and 19, the present disclosure provides a full-width headlamp, including an illuminated emblem 70 and an interactive lamp 10. The illuminated emblem 70 is located in the middle of the front end of the vehicle body, and the illuminated emblem 70 is configured to display a preset fixed pattern. The interactive lamp 10 is disposed on two sides of the illuminated emblem 70, and the interactive lamp 10 extends from the two sides of the illuminated emblem 70 to two sides of the front end of the vehicle body, and the interactive lamp 10 is configured to display different custom patterns.

It should be noted that the middle of the front end of the vehicle body refers to the middle in the width direction of the vehicle body. The illuminated emblem 70 and the interactive lamp 10 are both disposed at the front end of the vehicle body and belong to a front lighting system of the vehicle. Two sides of the interactive lamp 10 are arranged symmetrically with respect to the illuminated emblem 70. For example, the illuminated emblem 70 may be disposed at the center of a front grille of the vehicle or at a prominent position on the front face of the vehicle. The illuminated emblem 70 may be a pattern projection lamp, a customized welcome lamp, a logo lamp, or other lamps capable of displaying a preset fixed pattern. By arranging the illuminated emblem 70 in the middle of the front end of the vehicle body, it can not only be used for providing lighting, but also help to improve the identifiability of the brand of the vehicle, especially at night or in low-light environments, allowing people to identify the brand of the vehicle from a distance. The illuminated emblem 70, which can display a preset fixed pattern, adds the technological and modern sense to the vehicle, and can also be used as a unique decorative element to improve the appearance design of the entire vehicle. The interactive lamp 10 can display different customized patterns, and the interactive lamp 10 can be an adaptive driving lamp, a pixel lamp, a matrix LED headlamp, or an interactive light. For example, the interactive lamp 10 can be divided into hundreds or even thousands of independently controlled segments or pixels, and light-emitting elements at each segment or pixel can be independently turned on or off to display patterns or signals. For example, the interactive lamp 10 can be used to display navigation direction arrows, pedestrian warning symbols, or other safety information. For example, the interactive lamp 10 can adjust light brightness and color in a customized manner, so as to enhance its own colorfulness and aesthetics. In the present disclosure, the illuminated emblem 70 is disposed in the middle of the front end of the vehicle body, the interactive lamp 10 is disposed on the two sides of the illuminated emblem 70, and the interactive lamp 10 extends from the two sides of the illuminated emblem 70 to the two sides of the front end of the vehicle body, thereby providing a unique and modern aesthetic appearance of the full-width headlamp. It can be used as a visual identification mark for the vehicle brand, which increases the identification degree and appeal of the vehicle, and meanwhile, the illuminated emblem 70 and the interactive lamp 10 cooperate to extend the lighting area across the entire vehicle width, which helps to improve the visibility during travelling at night, and the cooperation between the illuminated emblem 70 and the interactive lamp 10 allows better coordination with the vehicle contour, thereby improving the aesthetics of the front end of the vehicle body.

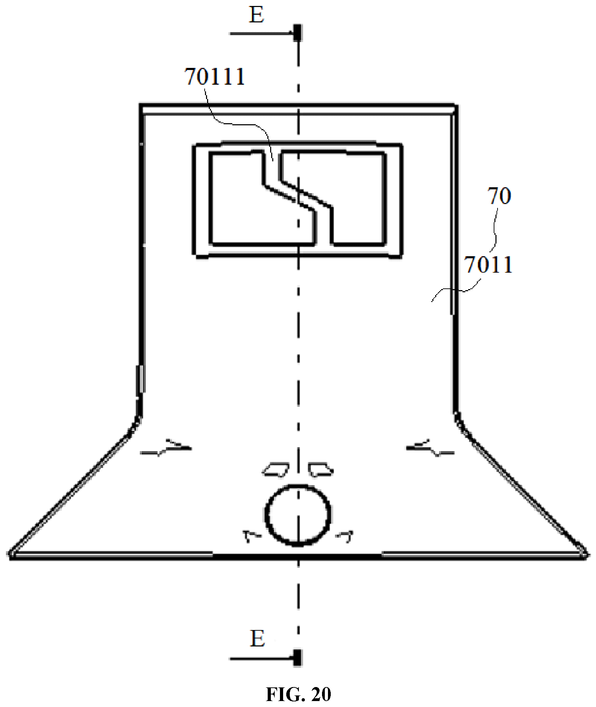

Referring to FIGS. 20 to 24, as an optional embodiment of the present disclosure, the illuminated emblem 70 includes: a display panel 7011 including a first light-transmitting region 70111 configured to form the preset fixed pattern; a first light source 7012 disposed on a side of the display panel 7011 close to the vehicle body and facing the display panel 7011; and a first light guide member 7013 disposed between the display panel 7011 and the first light source 7012 and configured to guide light from the first light source 7012 to the first light-transmitting region 70111.

It should be noted that the display panel 7011 may include a transparent material, and by coating a light-shielding coating on the transparent material, the display panel 7011 is provided with the first light-transmitting region 70111 configured to form the preset fixed pattern. For example, the illuminated emblem 70 serves as a logo lamp display region, when the displayed pattern needs to be changed, the display panel 7011 may be replaced to realize adjustment in the pattern, so that the pattern displayed by the illuminated emblem 70 can be modified according to actual requirements. The first light source 7012 includes a first light-emitting element, an LED chip, a circuit board, a light-emitting element driver, and/or a radiator. The first light-emitting element is electrically connected to the circuit board, and the LED chip and the light-emitting element driver are electrically connected to the circuit board and can control the first light-emitting element. The circuit board of the first light source 7012 is mounted in the lamp housing 50 through a heat dissipation substrate 7015, and the heat dissipation substrate 7015 and the circuit board are bonded and fixed by a part of an adhesive backing 7016 to facilitate heat dissipation of the illuminated emblem 70. The first light guide member 7013 can guide the light from the first light source 7012 to the first light-transmitting region 70111, so that the light can be more uniformly emitted from the first light-transmitting region 70111 of the display panel 7011, which can make the illuminated emblem 70, e.g., the logo lamp, more aesthetically pleasing, and can solve the problems of uneven lighting and inability to change the light pattern in existing logo lamps.

Referring to FIGS. 20, 22 and 24, as an optional embodiment of the present disclosure, the first light-transmitting region 70111 is provided with a semi-transparent plating or coating, so that when the illuminated emblem 70 is lit, the luminous preset fixed pattern is visible from the front end of the vehicle body. When the illuminated emblem 70 is turned off, the semi-transparent plating or coating can prevent the components inside the illuminated emblem 70 from being seen from the front end of the vehicle body, so as to maintain a certain aesthetic appearance of the illuminated emblem 70 when the illuminated emblem 70 is turned off. For example, a semi-transparent film is attached to the first light-transmitting region 70111 to form the coating of the first light-transmitting region 70111.

Referring to FIGS. 20 to 24, as an optional embodiment of the present disclosure, the display panel 7011, the first light source 7012, and the first light guide member 7013 are all mounted in a housing 7018, and the housing 7018 is mounted at the middle position of the front end of the vehicle body in the width direction of the vehicle body.

Further, an outer panel 7017 is disposed on the housing 7018, and the outer panel 7017 includes a light-transmitting panel 70171 and a light-shielding panel 70172. The light-shielding panel 70172 is located on a side of the light-transmitting panel 70171 facing the first light source 7012, a hollow structure is disposed on the light-shielding panel 70172, and the display panel 7011 is disposed in the hollow structure on the light-shielding panel 70172.

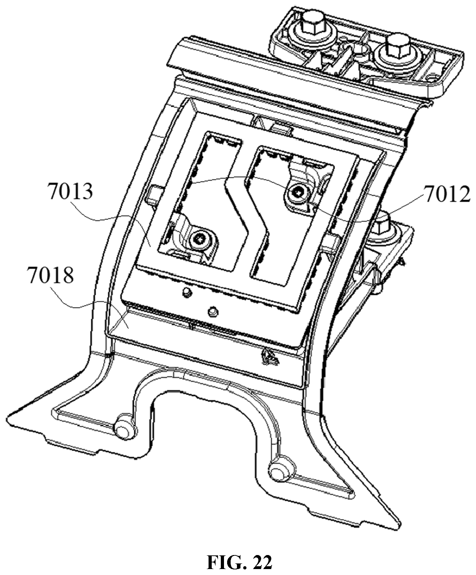

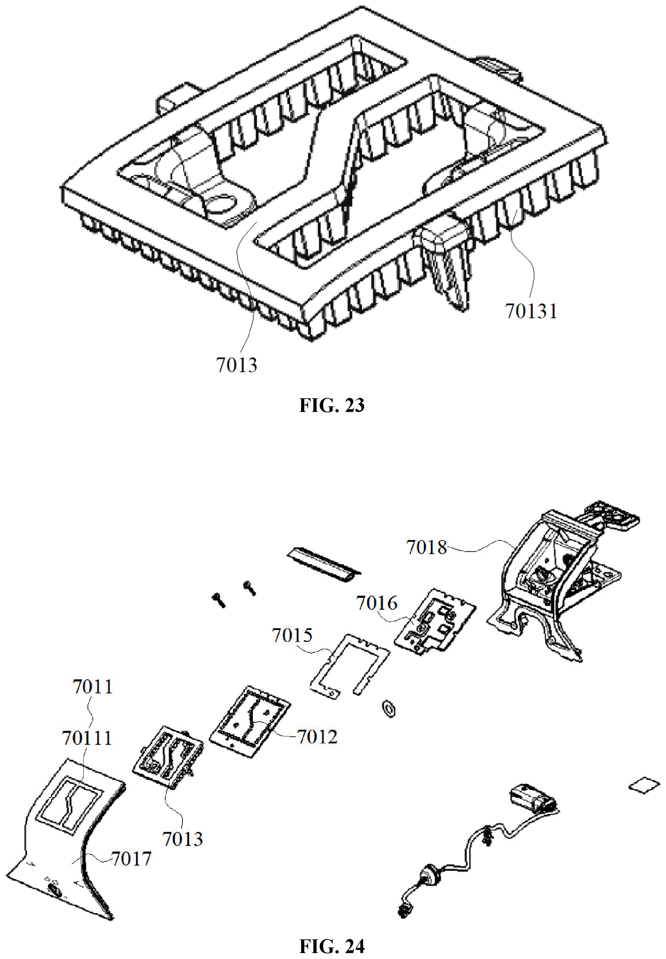

Referring to FIGS. 22 and 23, as an optional embodiment of the present disclosure, protrusions are provided on one side of the first light guide member 7013 and are corresponding to first light-emitting elements of the first light source 7012 one by one, and a light-exiting surface is provided on the other side of the first light guide member 7013 and has a contour consistent with that of the first light-transmitting region 70111. Each protrusion 70131 receives light emitted from the respective light-emitting element and uniformly emits the light from the light-exiting surface. And, when an SMD (surface mount device) LED is used as the first light-emitting element, the protrusion 70131 can exactly abut against a top surface of the SMD LED, thereby improving the uniformity and aesthetic appearance of the preset fixed pattern displayed by the illuminated emblem 70.

As an optional embodiment of the present disclosure, referring to FIGS. 22 and 23, a plurality of first light-emitting elements of the first light source 7012 may be arranged at uniform intervals along the contour of the first light-transmitting region 70111, so that the number of the arranged first light-emitting elements can be reduced, the costs and energy consumption can be reduced, and the heat dissipation requirement is also reduced.

Referring to FIGS. 2, 3, 19 and 25 to 27, a mounting bracket 80 for a front bumper is further included, and the mounting bracket 80 for the front bumper includes a bracket body 8010. The bracket body 8010 is provided with: a first connecting portion 801 configured to be connected to the headlamp assembly 1000; a slot structure 802 configured to enable an edge of a front bumper 8030 to be inserted therein in a first direction, where the first direction is a front-rear direction of the vehicle body; and a first limiting portion 803 configured to retain the edge of the front bumper 8030, that is inserted into the slot structure 802, in the slot structure 802.

It should be noted that, as shown in FIGS. 2, 3, 19, and 27, the mounting bracket 80 for the front bumper is configured to connect the headlamp assembly 1000 at the front end of the vehicle body of the vehicle to the front bumper 8030. When in use, the mounting bracket 80 for the front bumper is mounted on the headlamp assembly 1000, and then the front bumper 8030 is mounted on the mounting bracket 80 for the front bumper. As shown in FIGS. 3, 25 and 27, the bracket body 8010 of the mounting bracket 80 for the front bumper is provided with the first connecting portion 801 configured to be connected to the headlamp assembly 1000, where the first connecting portion 801 is a hole or a connecting screw connected to the headlamp assembly 1000, or other structures that can be fixedly connected or detachably connected to the headlamp assembly 1000. The edge of the front bumper 8030 can be quickly mounted on the mounting bracket 80 for the front bumper in the first direction by disposing the slot structure 802 on the bracket body 8010. The edge of the front bumper 8030, that has been inserted into the slot structure 802, can be retained in the slot structure 802 by providing the first limiting portion 803. The stable mounting of the front bumper 8030 can be realized through the cooperation of the slot structure 802 and the first limiting portion 803. The first limiting portion 803 may provide limiting by snap-fit or screw connection. The front bumper 8030 is exposed to the outside the vehicle, the use of the screw connection may lead to a corrosion problem after a long time, with a relatively complicated and inefficient mounting process; meanwhile, a mounting hole also needs to be provided on the front bumper 8030 for mounting screws, which is not conducive to the aesthetic appearance of the front end of the vehicle body. Therefore, the first limiting portion 803 of the present disclosure preferably adopts the snap-fit connection to provide limiting. The first limiting portion 803 is in snap-fit connection with the front bumper 8030 by cooperating with the slot structure 802 on the mounting bracket 80 for the front bumper. On the one hand, a shock absorption function can be achieved. The snap-fit structure, in which the slot structure 802 and the first limiting portion 803 cooperate with each other, can absorb a certain amount of impact force when the vehicle vibrates or is subjected to a collision, thereby reducing damage to the vehicle. There is a certain size difference in the structure and manufacturing process of the mounting bracket 80 for the front bumper and the front bumper 8030. By using the connection manner in which the slot structure 802 cooperates with the first limiting portion 803, fine adjustment and alignment can be realized to a certain extent during the mounting process, so that the front bumper 8030 perfectly fits the vehicle body. When the first limiting portion 803 and the front bumper 8030 are in snap-fit connection with each other and the front bumper 8030 needs to be detached, since the mounting bracket 80 for the front bumper is in snap-fit connection with the front bumper 8030, the front bumper 8030 can be detached by directly pulling it outward with force, which is convenient for detaching without affecting the assembly of other parts.

Further, the mounting bracket 80 for the front bumper is integrally provided, which is helpful to simplify the assembly process, ensure the alignment accuracy between the front bumper 8030, the mounting bracket 80 for the front bumper, and the headlamp assembly 1000, improve the stability and durability of the entire front end of the vehicle body, and facilitate maintenance and replacement.

Further, as shown in FIGS. 2 and 19, the mounting bracket 80 for the front bumper may be provided in two groups, and the two groups of the mounting bracket 80 are arranged symmetrically at the front end of the vehicle body to realize the fixed mounting of the front bumper 8030.

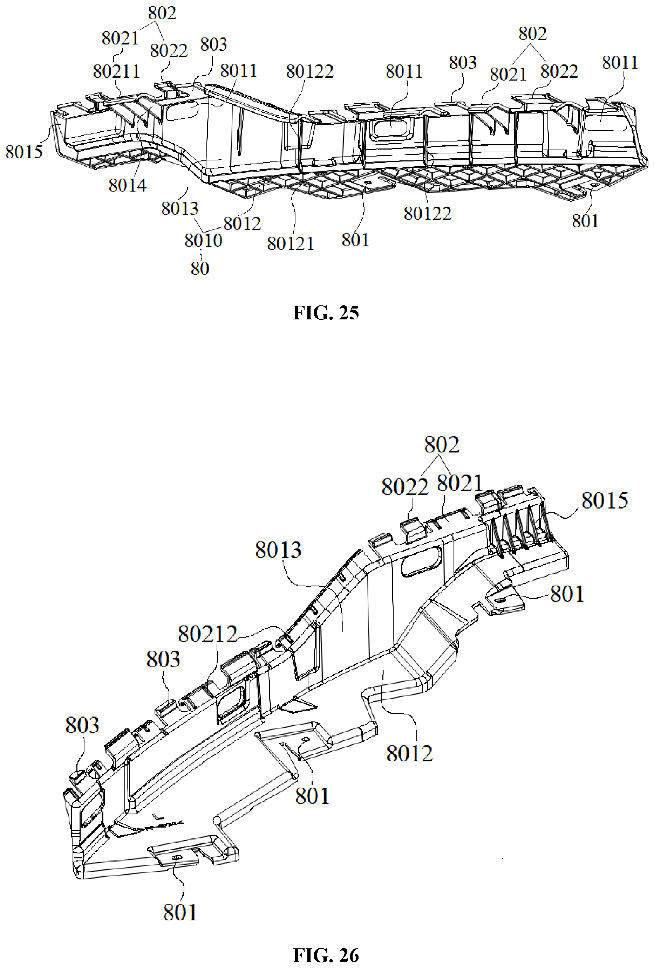

Further, as shown in FIG. 25, the first limiting portion 803 is a protrusion, a groove, or a through hole. When two or more first limiting portions 803 are provided, the first limiting portion 803 is at least one of the protrusion, the groove, or the through hole.

Referring to FIGS. 2, 3 and 25, as an optional embodiment of the present disclosure, the slot structure 802 includes at least a first clamping portion 8021 and a second clamping portion 8022.

The first clamping portion 8021 and the second clamping portion 8022 are both cantilevered from the bracket body 8010 towards the front end of the vehicle body, so that the slot structure 802 can at least generate a vertical support force for the front bumper 8030.

It should be noted that, the front end of the vehicle body refers to a direction of the vehicle body towards the front end of the vehicle body. With the arrangement of the first clamping portion 8021 and the second clamping portion 8022, rapid and stable clamping of the front bumper 8030 can be achieved. The first clamping portion 8021 and the second clamping portion 8022 are generally arranged in parallel to clamp the front bumper 8030, and the slot structure 802 can be disposed perpendicular to the bracket body 8010 or at an angle with the bracket body 8010, depending on actual requirements. However, it is necessary to ensure that the slot structure 802 can at least generate the vertical support force for the front bumper 8030 to support the mounted front bumper 8030. The first clamping portion 8021 and the second clamping portion 8022 can be directly integrally formed with the bracket body 8010, but it should be understood that the first clamping portion 8021 and the second clamping portion 8022 can also be mounted on the bracket body 8010 through fasteners such as screws.

Referring to FIGS. 25 and 26, as an optional embodiment of the present disclosure, the first clamping portion 8021 and the second clamping portion 8022 may be arranged symmetrically in structure or may be different in structure. A plurality of first clamping portions 8021 and a plurality of second clamping portions 8022 may be provided, where the structures of the plurality of first clamping portions 8021 may not be completely the same, and the structures of the plurality of second clamping portions 8022 may not be completely the same, which may be adaptively set according to actual requirements.

Referring to FIG. 25, as an optional embodiment of the present disclosure, a third reinforcing rib 8014 is provided between the first clamping portion 8021 and the bracket body 8010, so that the first clamping portion 8021 located below the second clamping portion 8022 can provide strong support for the front bumper 8030.

Referring to FIGS. 3 and 25, as an optional embodiment of the present disclosure, the bracket body 8010 is provided with a first positioning hole 8011, which is configured to be connected to a positioning post 802021 on the headlamp assembly 1000.

It should be noted that the first positioning hole 8011 is provided on the bracket body 8010 to adapt to the positioning post 802021 mounted on the headlamp assembly 1000, so as to realize the mounting and positioning of the mounting bracket 80 for the front bumper. And, the first positioning hole 8011 can snap-fit and limit the positioning post 802021 on the headlamp assembly 1000, so as to prevent an upper portion of the bracket body 8010 from tipping and collapsing in a resultant direction of the positive X-axis direction and the negative Z-axis direction.

Referring to FIGS. 25, as an optional embodiment of the present disclosure, a free end of the first clamping portion 8021 and/or the second clamping portion 8022 is provided with a guide portion 80211 configured to guide the front bumper 8030 to be inserted into the slot structure 802.

It should be noted that, by providing the guide portion 80211, the front bumper 8030 can be quickly mounted on the mounting bracket 80 for the front bumper, which is beneficial to improving the assembly efficiency.

Referring to FIG. 25, further, the free ends of the first clamping portion 8021 and the second clamping portion 8022 are both provided with guide portions 80211, and the two guide portions 80211 are oriented away from each other in a direction where the slot structure 802 is cantilevered.

Referring to FIGS. 3, 26 and 27, as an optional embodiment of the present disclosure, the bracket body 8010 further includes a first wall 8012 configured to be fit with the bottom of the headlamp assembly 1000, and a second wall 8013 configured to be fit with the front of the headlamp assembly 1000, which can improve the assembly adaptability and mounting stability of the bracket body 8010 and the headlamp assembly 1000.

The first limiting portion 803 is disposed on the first wall 8012, which is conducive to the connection between the bracket body 8010 and the lamp housing 50 at the bottom of the headlamp assembly 1000. The slot structure 802 is disposed on the second wall 8013 on a side facing the front bumper 8030, that is, the slot structure 802 is disposed on the bracket body 8010 and located on a side facing the front bumper 8030, which is conducive to the quick insertion mounting of the front bumper 8030.

Referring to FIGS. 3, 25, 26 and 27, further, the headlamp assembly 1000 includes the lamp housing 50 and the lamp cover 40, the first wall 8012 of the bracket body 8010 is fit with the lamp housing 50, and the second wall 8013 of the bracket body 8010 is fit with the lamp cover 40.

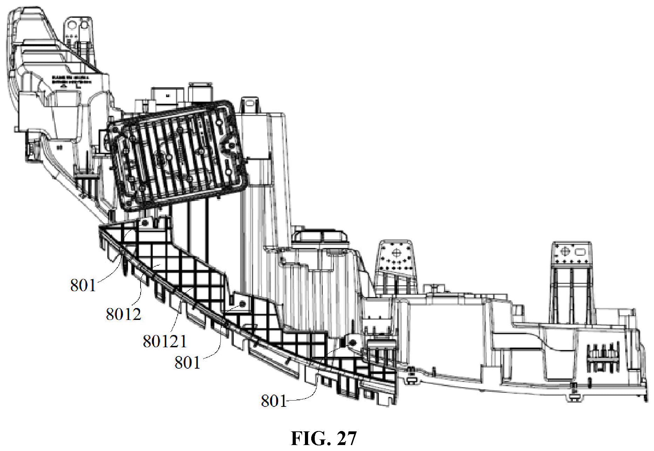

Referring to FIGS. 25 and 27, as an optional embodiment of the present disclosure, the bottom of the bracket body 8010 is provided with first reinforcing ribs 80121 arranged in a criss-crossed manner. The bracket body 8010 is provided with second reinforcing ribs 80122 in a direction perpendicular to the bottom, and the first reinforcing ribs 80121 and the second reinforcing ribs 80122 are at least partially connected to each other.

It should be noted that since the bracket body 8010 needs to bear at least a part or all of the weight of the front bumper 8030, the bracket body 8010 itself requires a certain degree of structural stability. Therefore, by disposing the criss-crossed first reinforcing ribs 80121 on the bottom of the bracket body 8010, that is, disposing the first reinforcing ribs 80121 on the second wall 8013 of the bracket body 8010, the bottom of the bracket body 8010 can be structurally reinforced from multiple directions, so that the bottom of the bracket body 8010 has the strength capable of bearing the front bumper 8030. By disposing the second reinforcing ribs 80122 on the bracket body 8010, that is, disposing the second reinforcing ribs 80122 on the first wall 8012 of the bracket body 8010, the second reinforcing ribs 80122 can provide the bracket body 8010 with at least part of the reinforcing effect in the Z-axis direction, so that the bracket body 8010 can effectively support the front bumper 8030 in the Z-axis direction. The first reinforcing ribs 80121 and the second reinforcing ribs 80122 have interconnected portions, which can improve the stability between the second wall 8013 and the first wall 8012 of the bracket body 8010 to a certain extent, and avoid or reduce the collapsing of the front bumper 8030 caused by the tipping of the second wall 8013 relative to the first wall 8012 in the resultant direction of the positive X-axis direction and the negative Z-axis direction, thereby improving the mounting stability of the front bumper 8030.

Referring to FIGS. 26 and 27, as an optional embodiment of the present disclosure, the first connecting portion 801 and the headlamp assembly 1000 are connected by fasteners.

It should be noted that, the lamp housing 50 is located at the bottom of the headlamp assembly 1000, and the lamp cover 40 is generally penetrated by fasteners such as screws, which may easily cause light leakage and affect the aesthetic appearance of the headlamp assembly 1000. The first connecting portion 801 is located on the first wall 8012 and is connected to the lamp housing 50 at the bottom of the headlamp assembly 1000, and the lamp housing 50 is penetrated by the screws, which generally does not affect the aesthetic appearance of the headlamp assembly 1000 as viewed from people's perspective. And, the bottom of the mounting bracket 80 for the front bumper serves as the main load-bearing portion. If the snap-fit connection is adopted, the bracket body 8010 may easily become separated from the headlamp assembly 1000. Therefore, the first connecting portion 801 is connected to the headlamp assembly 1000 by means of the fasteners, so as to improve the connection stability between the mounting bracket 80 for the front bumper and the headlamp assembly 1000.

Referring to FIG. 26, as an optional embodiment of the present disclosure, a convex rib 80212 is provided on a side of the first clamping portion 8021 and/or the second clamping portion 8022 clamping the front bumper 8030, and the convex rib 80212 is provided in a direction where the first clamping portion 8021 or the second clamping portion 8022 is cantilevered.

It should be noted that the front of the mounting bracket 80 for the front bumper clamps the front bumper 8030 through the cooperation of the first clamping portion 8021 and the second clamping portion 8022. The convex rib 80212 is provided on a side of the first clamping portion 8021 and/or the second clamping portion 8022 facing the front bumper 8030, and the convex rib 80212 is generally in the shape of a strip or a column. The direction where the first clamping portion 8021 or the second clamping portion 8022 is cantilevered corresponds to the insertion direction when the front bumper 8030 is inserted into the slot structure 802. By providing the convex rib 80212, the contact area between the first clamping portion 8021 and/or the second clamping portion 8022 and the front bumper 8030 can be reduced, and the spacing between the first clamping portion 8021 and the second clamping portion 8022 can be reduced, so that the clamping force of the first clamping portion 8021 and the second clamping portion 8022 on the front bumper 8030 can be increased, thereby improving the connection stability between the mounting bracket 80 for the front bumper and the headlamp assembly 1000.

Referring to FIGS. 25 and 26, as an optional embodiment of the present disclosure, the first clamping portion 8021 and the second clamping portion 8022 are disposed in a staggered manner along an upper edge direction of the bracket body 8010.

It should be noted that, by disposing the first clamping portion 8021 and the second clamping portion 8022 in the staggered manner along the upper edge direction of the bracket body 8010, a plurality of first clamping portions 8021 and a plurality of second clamping portions 8022 are provided, so that the clamping force can be uniformly distributed on a larger contact surface, the concentrated stress can be reduced, and the risk of deformation or damage that may occur during the clamping process can be reduced. The staggered arrangement of the first clamping portion 8021 and the second clamping portion 8022 can provide the better stability, especially for the irregularly shaped front bumper 8030, by arranging the first clamping portion 8021 and the second clamping portion 8022 in the staggered manner, more support points and contact areas can be provided, and the clamped front bumper 8030 can be prevented from moving or deviating from the proper position during the clamping process. Meanwhile, the staggered arrangement of the first clamping portion 8021 and the second clamping portion 8022 can minimize the gap between the first clamping portion 8021 and the second clamping portion 8022 in the upper edge direction of the bracket body 8010, so that the clamping force can be enhanced by providing tighter clamping. And, the staggered arrangement of the first clamping portion 8021 and the second clamping portion 8022 can provide more flexible clamping openings to adapt to different shapes and sizes of the edges of the front bumper 8030, thereby improving the adaptability of the first clamping portion 8021 and the second clamping portion 8022 to the clamping and fixing of the front bumper 8030.

Referring to FIGS. 25 and 26, further, a fourth reinforcing rib 8015 is provided between sides of the first wall 8012 and the second wall 8013 facing the headlamp assembly 1000 or at both ends of the bracket body 8010 in the upper edge direction thereof, which can improve the structural strength of the mounting bracket 80 for the front bumper, so as to avoid or reduce the problem of the collapsing of the second wall 8013 relative to the first wall 8012 in the resultant direction of the positive X-axis direction and the negative Z-axis direction, which would otherwise cause the mounting bracket to be unable to support the front bumper 8030..

In summary, the present disclosure effectively overcomes some practical problems in the related art and thus has high utilization value and practical significance.

The above embodiments are merely illustrative of the principles and effects of the present disclosure, and are not intended to limit the present disclosure. Any person skilled in the art can modify or change the above embodiments without departing from the spirit and scope of the present disclosure. Therefore, all equivalent modifications or changes made by those skilled in the art without departing from the spirit and technical ideas disclosed in the present disclosure should still be covered by the claims of the present disclosure.

## Claims

1. A headlamp assembly, comprising:
an interactive lamp configured to display interactive information;
a multifunctional lamp comprising two of a daytime running lamp, a position lamp, and a turn signal lamp integrated into one;
a headlamp module comprising a high beam lamp and a low beam lamp integrated into one; and
a lamp cover, the interactive lamp, the multifunctional lamp, and the headlamp module being all integrated and mounted in the lamp cover.

2. The headlamp assembly according to claim 1, wherein the interactive lamp is disposed above the multifunctional lamp, and the multifunctional lamp is disposed above the headlamp module.

3. The headlamp assembly according to claim 1, wherein the interactive lamp is arranged in a strip shape as a whole, and the interactive lamp is configured to extend in a width direction of a vehicle and towards a middle position at a front end of a vehicle body of the vehicle.

4. The headlamp assembly according to claim 3, wherein the multifunctional lamp is arranged in a strip shape as a whole, and the multifunctional lamp is configured to be parallel to the interactive lamp.

5. The headlamp assembly according to claim 1, further comprising:
a lamp housing configured to be connectable with a vehicle body frame and/or a vehicle body panel of a vehicle;
wherein the interactive lamp, the multifunctional lamp, and the headlamp module are integrated and mounted in the lamp housing.

6. The headlamp assembly according to claim 1, wherein the interactive lamp comprises:
a mounting plate mounted on the lamp housing;
a flexible circuit board mounted on the mounting plate and comprising light-emitting elements arranged in an array on an outer side thereof;
a diffuser plate, at least partially covering the outer side of the flexible circuit board and configured to diffuse light emitted from the light-emitting elements; and
an outer lens region disposed on the lamp cover and assembled on an outer side of the diffuser plate.

7. The headlamp assembly according to claim 4, wherein the multifunctional lamp comprises a light-emitting source with an adjustable color, and at least a portion of the light-emitting source differs in light color from other portions thereof.

8. The headlamp assembly according to claim 6, wherein the mounting plate is provided with a positioning unit configured to position and mount the flexible circuit board relative to the mounting plate.

9. The headlamp assembly according to claim 6, wherein the diffuser plate is provided with a light-blocking coating on a portion of an outer side and/or an inner side thereof, wherein the portion with the light-blocking coating forms a light-shielding region, and a portion without the light-blocking coating forms light-transmitting regions, and multiple of the light-transmitting regions are arranged corresponding to a single light-emitting element.

10. The headlamp assembly according to claim 9, wherein the outer lens region is provided with a plating or a coating on an inner side thereof, and the plating or the coating at least partially covers an outer side of the light-transmitting regions of the diffuser plate.

11. The headlamp assembly according to claim 7, wherein the multifunctional lamp comprises:
the light-emitting source mounted on the lamp housing;
a light source scattering channel mounted at a light-emitting end of the light-emitting source, the light source scattering channel being configured such that one end serves as a light source receiving end and the other end serves as a light source scattering end; and
a light-blocking enclosed cavity disposed around the light source scattering channel, with the light source scattering end of the light source scattering channel protruding out of an outlet of the light-blocking enclosed cavity.

12. The headlamp assembly according to claim 11, wherein the light-blocking enclosed cavity comprises a lower decorative plate and an upper decorative plate;
the lower decorative plate and the upper decorative plate are spaced apart from each other, with a gap forming the light-blocking enclosed cavity;
the light-emitting source and the light source scattering channel are disposed in the gap; and
the light source scattering end of the light source scattering channel protrudes out of the gap.

13. The headlamp assembly according to claim 11, wherein the light-emitting source comprises a first light source and a second light source;
the light source scattering channel comprises a first light guide portion disposed corresponding to the first light source and a second light guide portion disposed corresponding to the second light source, and the first light guide portion and the second light guide portion are arranged in a width direction of a vehicle body.

14. The headlamp assembly according to claim 5, wherein the lamp housing extends from a side of a front end of a vehicle body to a middle of the front end of the vehicle body, a vehicle lamp assembly is mounted at a front end of the lamp housing, the lamp housing is provided with a plurality of mounting legs on a side thereof away from the vehicle lamp assembly, the mounting legs are at least configured to connect a front end frame and a fender bracket of the vehicle, and the vehicle lamp assembly comprises the interactive lamp, the multifunctional lamp, and the headlamp module.

15. The headlamp assembly according to claim 14, wherein the mounting legs comprise a first mounting leg, the first mounting leg is disposed at an upper end of the lamp housing located at the side of the front end of the vehicle body, with a positioning pin on the first mounting leg forming a positioning fit with a through hole of the fender bracket to limit displacement of the lamp housing in a length direction of the vehicle and a width direction of the vehicle; and
the mounting legs comprise a second mounting leg, the second mounting leg is disposed at an upper end of the lamp housing located in the middle of the front end of the vehicle body, with a positioning hole on the second mounting leg being a waist-shaped hole, and the waist-shaped hole in a width direction forms a positioning fit with a positioning protrusion of the front end frame in the length direction of the vehicle.

16. The headlamp assembly according to claim 14, wherein for each of at least some of the mounting legs, a fragile portion is disposed on the mounting leg; and the mounting leg is provided with a connecting portion on a side of the fragile portion close to the lamp housing, and the connecting portion is configured to mount a spare mounting leg.

17. The headlamp assembly according to claim 1, wherein a headlamp seal is disposed between the headlamp assembly and a front hood;
the headlamp seal is configured to form a seal between the headlamp assembly and the front hood, and the headlamp seal has a variable cross-section;
a cross-sectional shape and/or a cross-sectional area of the headlamp seal gradually changes from a first end to a second end of the headlamp seal; and
the first end is located close to a middle of a vehicle in a width direction, and the second end is located close to a fender of the vehicle.

18. The headlamp assembly according to claim 17, wherein the headlamp seal is provided with a strip-shaped cavity in a length direction thereof, and a cross-sectional shape and/or a cross-sectional area of the strip-shaped cavity gradually changes from the first end to the second end of the headlamp seal.

19. The headlamp assembly according to claim 17, wherein the headlamp seal comprises:
a lamp assembly sealing surface configured to fit against the headlamp assembly;
a hood sealing edge configured to fit against a lower side of a front end of the front hood;
a mounting surface configured to be mounted to a vehicle frame; and
an arcuate surface disposed opposite to the mounting surface.

20. A full-width headlamp, comprising:
an illuminated emblem located in a middle of a front end of a vehicle body, and configured to display a preset fixed pattern; and
an interactive lamp disposed on two sides of the illuminated emblem, wherein the interactive lamp extends from the two sides of the illuminated emblem to two sides of the front end of the vehicle body, and the interactive lamp is configured to display different custom patterns.

21. The full-width headlamp according to claim 20, wherein the illuminated emblem comprises:
a display panel comprising a first light-transmitting region configured to form the preset fixed pattern;
a first light source disposed on a side of the display panel close to the vehicle body and facing the display panel; and
a first light guide member disposed between the display panel and the first light source and configured to guide light from the first light source to the first light-transmitting region.

22. The full-width headlamp according to claim 21, wherein protrusions are provided on one side of the first light guide member and are corresponding to first light-emitting elements of the first light source one by one, and a light-exiting surface is provided on the other side of the first light guide member and has a contour consistent with that of the first light-transmitting region.

23. A vehicle, comprising the headlamp assembly of any one of claims 1 to 19 or the full-width headlamp of any one of claims 20 to 22.

24. The vehicle according to claim 23, further comprising a mounting bracket for a front bumper, wherein the mounting bracket for the front bumper comprises a bracket body provided with:
a first connecting portion configured to be connected to the headlamp assembly;
a slot structure configured to enable an edge of the front bumper to be inserted therein in a first direction, wherein the first direction is a front-rear direction of a vehicle body; and
a first limiting portion configured to retain the edge of the front bumper, that is inserted into the slot structure, in the slot structure.

25. The vehicle according to claim 24, wherein the slot structure comprises a first clamping portion and a second clamping portion;
wherein the first clamping portion and the second clamping portion are both cantilevered from the bracket body towards a front end of the vehicle body, so that the slot structure can at least generate a vertical support force for the front bumper.
